# EUROPEAN PATENT APPLICATION

(11) **EP 3 522 473 A1**
(43) Date of publication of application: **07.08.2019**
(21) Application number: 16920146.4
(22) Date of filing: 25.10.2016
(51) Int. Cl.: H04L 29/06

(54) **DATA TRANSMISSION METHOD, APPARATUS AND SYSTEM**

(71) Applicant: Huawei Technologies Co., Ltd., Longgang District Shenzhen, Guangdong 518129 (CN)
(72) Inventor: WEI, Anni, Shenzhen Guangdong 518129 (CN)
(74) Representative: Isarpatent
(86) International application number: PCT/CN2016/103301
(87) International publication number: WO 2018/076183

(57) **Abstract**

Embodiments of the present invention relate to the field of Internet technologies, and disclose a data transmission method, apparatus, and system. The method includes: receiving, by an intermediate device, a first data transmission message sent by a first device and carrying first data, where the first data is target data encrypted by using a first encryption key; performing, by the intermediate device based on a first decryption key agreed upon between the intermediate device and the first device, decryption processing on the first data to obtain the target data, and performing preset data processing on the target data; performing, by the intermediate device based on a second encryption key agreed upon between the intermediate device and a second device, encryption processing on the target data that undergoes data processing, to obtain second data; and sending, by the intermediate device, a second data transmission message carrying the second data to the second device. The present invention may enable the intermediate device to work normally.

## Description

### TECHNICAL FIELD

The present invention relates to the field of Internet technologies, and in particular, to a data transmission method, apparatus, and system.

### BACKGROUND

To ensure security of data transmission, more servers require that data to be transmitted to or from terminals should undergo encryption processing. To be specific, the TLS (Transport Layer Security, Transport Layer Security) protocol is extensively applied. For example, the TLS protocol is extensively applied to secure communication between browsers and web servers.

When encryption is required for data transmission, a data transmission process is generally as follows: A terminal may first establish a TCP (Transmission Control Protocol, Transmission Control Protocol) connection to a server, and then may establish a TLS connection, where a process of establishing the TLS connection is a process of agreeing upon keys between the terminal and the server; and finally, the terminal performs data transmission with the server, where during data transmission, the terminal and the server may perform encryption and decryption processing on transmitted data by using the agreed keys.

In a process of implementing the present invention, the inventor finds that the prior art has at least the following problem:

When the data is transmitted between the terminal and the server, an intermediate device having a service optimization function (which may be an intermediate device such as a firewall device or a device provided by a carrier for video optimization) may be traversed in the transmission process. To be specific, in the data transmission process, the intermediate device may need to perform data processing on the transmitted data (when the data transmitted by the server or the terminal arrives at the intermediate device, the intermediate device may perform check processing or other data processing on the data transmitted by the server or the terminal, that is, the intermediate device may perform, according to a data processing function that can be implemented by the intermediate device, data processing on the data transmitted by the server or the terminal). As the TLS protocol is extensively applied, more servers require that data to be transmitted to or from terminals should undergo encryption processing. However, when the encrypted data traverses the intermediate device, because the data is encrypted by using the keys agreed upon between the terminal and the server, the intermediate device does not know the keys. Consequently, the intermediate device cannot read the data transmitted between the terminal and the server, and therefore the intermediate device cannot work normally.

### SUMMARY

To enable an intermediate device to work normally when data transmitted between a first device and a second device is encrypted, embodiments of the present invention provide a data transmission method, apparatus, and system. The technical solutions are as follows:
According to a first aspect, a data transmission method is provided, and the method includes:
obtaining, by a first device, target data to be transmitted to a second device;
if the target data is data that an intermediate device is allowed to read, performing, by the first device based on a first encryption key agreed upon between the first device and the intermediate device, encryption processing on the target data to obtain first data; and
sending, by the first device, a first data transmission message carrying the first data to the intermediate device.

To ensure security of data transmission, more servers require that data to be transmitted to or from terminals should undergo encryption processing. To be specific, the TLS protocol or the QUIC (Quick UDP (User Datagram Protocol, User Datagram Protocol) Internet Connection, UDP Based Quick Internet Transport Layer) protocol is extensively applied. In this case, when the first device intends to send data to the second device, the first device may obtain the target data to be transmitted. After obtaining the target data, the first device may determine whether the target data is the data that the intermediate device is allowed to read. If the target data is the data that the intermediate device is allowed to read, the first device may perform, based on the prestored first encryption key, encryption processing on the target data to obtain the first data. The first device may further prestore an encryption algorithm (which may be referred to as a first encryption algorithm). To be specific, the first device may perform, based on the first encryption key and the first encryption algorithm that are agreed upon between the first device and the intermediate device, encryption processing on the target data to obtain the first data. After obtaining the first data, the first device may send a data transmission message (that is, the first data transmission message) to the intermediate device, where the first data transmission message may further carry the first data.

With reference to the first aspect, in a first possible implementation of the first aspect, the first data transmission message further carries a first preset identifier, and the first preset identifier is used to indicate that the intermediate device is allowed to read the target data.

With reference to the first possible implementation of the first aspect, in a second possible implementation of the first aspect, the method further includes:
if the target data is data that the intermediate device is not allowed to read, performing, by the first device based on a third encryption key agreed upon between the first device and the second device, encryption processing on the target data to obtain third data; and
sending, by the first device, a third data transmission message carrying the third data and a second preset identifier to the intermediate device, where the second preset identifier is used to indicate that the intermediate device is not allowed to read the target data.

After obtaining the target data, the first device may determine whether the target data is the data that the intermediate device is allowed to read. If the target data is the data that the intermediate device is not allowed to read, the first device may perform, based on the prestored third encryption key, encryption processing on the target data to obtain the third data. The first device may further prestore an encryption algorithm (which may be referred to as a third encryption algorithm). To be specific, the first device may perform, based on the third encryption key and the third encryption algorithm that are agreed upon between the first device and the second device, encryption processing on the target data to obtain the third data.

In view of a case in which the first data transmission message carries the first preset identifier if the target data is the data that the intermediate device is allowed to read, when the first device determines that the target data is the data that the intermediate device is not allowed to read, the first device may send the third data transmission message carrying the third data and the second preset identifier to the intermediate device, where the second preset identifier may be used to indicate that the intermediate device is not allowed to read the target data. In addition, the first device may perform integrity protection processing on the second preset identifier.

This may enable the intermediate device to work normally if the target data is the data that the intermediate device is allowed to read, or may ensure security of the target data if the target data is the data that the intermediate device is not allowed to read.

With reference to the second possible implementation of the first aspect, in a third possible implementation of the first aspect, the first preset identifier or the second preset identifier is set in a Transport Layer Security TLS header; or
the first preset identifier or the second preset identifier is set in a User Datagram Protocol Based Quick Internet Transport Layer QUIC header.

With reference to the first aspect, in a fourth possible implementation of the first aspect, the method further includes:
sending, by the first device, a verification instruction message to the intermediate device, where the verification instruction message is used to instruct the intermediate device to send, to the second device, a verification request used to verify validity of the intermediate device;
receiving, by the first device, a feedback message sent by the intermediate device and used to indicate that the intermediate device is valid; and
agreeing, by the first device with the intermediate device, upon the first encryption key and a corresponding first decryption key that are used for data transmission.

When the data is transmitted between the first device and the second device, the data may be transmitted based on the TLS protocol, or the data may be transmitted based on the QUIC protocol. When the data is transmitted based on the TLS protocol, before the first device transmits the data to the second device, the first device may first establish a TCP (Transmission Control Protocol, Transmission Control Protocol) connection, that is, the first device performs a three-way TCP handshake with the second device, and then the first device establishes a TLS connection, where a process of establishing the TLS connection is a process of agreeing upon keys between the first device and the second device, that is, agreeing upon the third encryption key and a corresponding third decryption key that are used for data transmission in the following process. When the data is transmitted based on the QUIC protocol, before the first device transmits the data to the second device, the first device may first establish a QUIC connection.

When the first device transmits the target data to the second device, the first device may send the verification instruction message to the intermediate device. The verification instruction message may be used to instruct the intermediate device to send, to the second device, the verification request used to verify validity of the intermediate device. For the foregoing two cases, if the target data is transmitted based on the TLS protocol, the verification instruction message may be sent in the process of establishing TLS or after the TLS connection is established; or if the target data is transmitted based on the QUIC protocol, the verification instruction message may be sent in the process of establishing the QUIC connection or after the QUIC connection is established. This is not limited in this embodiment of the present invention. In addition, device information of the intermediate device may be preset in the first device. The device information of the intermediate device may be a device identifier of the intermediate device (which may be a device name of the intermediate device, or may be a MAC address of the intermediate device, or may be an IP (Internet Protocol, Internet Protocol) address of the intermediate device), data processing function information (which may be text information describing a data processing function of the intermediate device), and a certificate. In this case, the verification instruction message may carry the device information of the intermediate device. Alternatively, device information of the intermediate device may not be preset in the first device. This is not limited in this embodiment of the present invention. In addition, the verification instruction message sent by the first device may be transmitted in a plaintext manner.

After the verification instruction message is sent to the intermediate device, the intermediate device may send, to the second device, the verification request used to verify validity of the intermediate device. After verifying that the intermediate device is valid, the second device may send, to the first device through the intermediate device, the feedback message used to indicate that the intermediate device is valid. The first device may receive the feedback message sent by the intermediate device and used to indicate that the intermediate device is valid. Further, the first device may agree with the intermediate device, upon the first encryption key and the corresponding first decryption key that are used for data transmission.

In this way, validity of the intermediate device is verified first, and on a basis that the intermediate device is valid, the first encryption key and the corresponding first decryption key are agreed upon. This may prevent the target data from being read by a malicious device (that is, an invalid intermediate device), and may further ensure security of the target data.

According to a second aspect, a data transmission method is provided, and the method includes:
receiving, by an intermediate device, a first data transmission message sent by a first device and carrying first data, where the first data is target data encrypted by using a first encryption key;
performing, by the intermediate device based on a first decryption key agreed upon between the intermediate device and the first device, decryption processing on the first data to obtain the target data, and performing preset data processing on the target data;
performing, by the intermediate device based on a second encryption key agreed upon between the intermediate device and a second device, encryption processing on the target data that undergoes data processing, to obtain second data; and
sending, by the intermediate device, a second data transmission message carrying the second data to the second device.

After the first device sends the first data transmission message to the intermediate device, the intermediate device may receive the first data transmission message sent by the first device, and may parse the first data transmission message to obtain the first data carried in the first data transmission message, where the first data is the target data encrypted by using the first encryption key. After obtaining the target data, the intermediate device may perform preset data processing on the obtained target data based on a data processing function of the intermediate device. Specifically, the intermediate device may have a preset data processing function, and the preset data processing function may be a data statistics function. In this case, for ease of collecting statics, the intermediate device may read the target data to be transmitted from the first device to the second device, without changing the target data. The preset data processing function may also be a video optimization function. In this case, the intermediate device may read the target data to be transmitted from the first device to the second device, and change the target data based on the preset data processing function. For example, the first device is a server, and the video optimization function is to change high definition video data to standard definition video data. In this case, the intermediate device may read the high definition video data (that is, the target data) sent by the server to a terminal, and may further change the target data to the standard definition video data. In other words, the data obtained after the intermediate device performs preset data processing on the target data may be the same as or different from the target data. After performing preset data processing on the target data, the intermediate device may obtain the prestored second encryption key, and perform, based on the second encryption key, encryption processing on the target data that undergoes data processing, to obtain the second data. The intermediate device may further prestore an encryption algorithm (which may be referred to as a second encryption algorithm). To be specific, the intermediate device may perform, based on the second encryption key and the second encryption algorithm that are agreed upon between the intermediate device and the second device, encryption processing on the target data that undergoes data processing, to obtain the second data. After obtaining the second data, the intermediate device may send a data transmission message (that is, the second data transmission message) to the second device, where the second data transmission message may carry the second data.

With reference to the second aspect, in a first possible implementation of the second aspect, the first data transmission message further carries a first preset identifier, and the first preset identifier is used to indicate that the intermediate device is allowed to read the target data;
the performing, by the intermediate device based on a first decryption key agreed upon between the intermediate device and the first device, decryption processing on the first data to obtain the target data, and performing preset data processing on the target data includes:
when the intermediate device determines that the first data transmission message carries the first preset identifier, performing, by the intermediate device based on the first decryption key agreed upon between the intermediate device and the first device, decryption processing on the first data to obtain the target data, and performing preset data processing on the target data; and
the sending, by the intermediate device, a second data transmission message carrying the second data to the second device includes:
   sending, by the intermediate device, the second data transmission message carrying the second data and the first preset identifier to the second device.

After obtaining the first data transmission message, the intermediate device may determine whether the first data transmission message carries the first preset identifier, and when determining that the first data transmission message carries the first preset identifier, may perform, based on the first decryption key agreed upon between the intermediate device and the first device, decryption processing on the first data to obtain the target data, and perform preset data processing on the target data. When the first data transmission message carries the first preset identifier, the second data transmission message sent by the intermediate device to the second device may further carry the first preset identifier, that is, the second data transmission message carries the second data and the first preset identifier.

In this way, a data transmission message may carry a corresponding preset identifier, so that the intermediate device and the second device can easily learn an encryption key on which the first data sent by the first device is based. Therefore, efficiency of determining a decryption key may be improved.

With reference to the first possible implementation of the second aspect, in a second possible implementation of the second aspect, the method further includes:
receiving, by the intermediate device, a third data transmission message sent by the first device and carrying third data and a second preset identifier, where the second preset identifier is used to indicate that the intermediate device is not allowed to read the target data, and the third data is the target data encrypted by using a third encryption key; and
when the intermediate device determines that the third data transmission message carries the second preset identifier, sending, by the intermediate device, the third data transmission message to the second device.

After the first device sends the third data transmission message carrying the third data and the second preset identifier to the intermediate device, the intermediate device may receive the third data transmission message sent by the first device, and may parse the third data transmission message to obtain the third data and the second preset identifier carried in the third data transmission message, where the third data is the target data encrypted by using the third encryption key. After receiving the third data transmission message, the intermediate device may determine whether the third data transmission message carries the second preset identifier, and when determining that the third data transmission message carries the second preset identifier, that is, when the target data is data that the intermediate device is not allowed to read, may forward the third data transmission message to the second device, without performing any processing on the third data.

This may enable the intermediate device to work normally if the target data is data that the intermediate device is allowed to read, or may ensure security of the target data if the target data is the data that the intermediate device is not allowed to read.

With reference to the second possible implementation of the second aspect, in a third possible implementation of the second aspect, the first preset identifier or the second preset identifier is set in a Transport Layer Security TLS header; or
the first preset identifier or the second preset identifier is set in a User Datagram Protocol Based Quick Internet Transport Layer QUIC header.

With reference to the second aspect, in a fourth possible implementation of the second aspect, the method further includes:
receiving, by the intermediate device, a verification instruction message sent by the first device;
sending, by the intermediate device, a verification request carrying device information of the intermediate device to the second device;
receiving, by the intermediate device, a feedback message sent by the second device and used to indicate that the intermediate device is valid, and sending, to the first device, the feedback message sent by the second device and used to indicate that the intermediate device is valid; and
agreeing, by the intermediate device with the first device, upon the first encryption key and the first decryption key that are used for data transmission, and agreeing with the second device, upon the second encryption key and a corresponding second decryption key that are used for data transmission.

After the first device sends the verification instruction message to the intermediate device, the intermediate device may receive the verification instruction message sent by the first device. If the verification instruction message carries the device information of the intermediate device, after receiving the verification instruction message, the intermediate device may parse the verification instruction message to obtain the device information of the intermediate device that is carried in the verification instruction message.

If the verification instruction message carries the device information of the intermediate device, after receiving the verification instruction message sent by the first device, the intermediate device may obtain the device information of the intermediate device that is carried in the verification instruction message, and may send the verification request carrying the device information of the intermediate device to the second device. If the verification instruction message does not carry the device information of the intermediate device, that is, the device information of the intermediate device is not preconfigured in the first device, after receiving the verification instruction message sent by the first device, the intermediate device may obtain the locally prestored device information of the intermediate device, and send the verification request carrying the device information of the intermediate device to the second device. In addition, the verification request sent by the intermediate device may be transmitted in a plaintext manner. After receiving the verification request, the second device may verify validity of the intermediate device. When the intermediate device is valid, the second device may send, to the intermediate device, the feedback message used to indicate that the intermediate device is valid. Further, the intermediate device may receive the feedback message sent by the second device and used to indicate that the intermediate device is valid, and may send, to the first device, the feedback message sent by the second device and used to indicate that the intermediate device is valid. Then the intermediate device may agree with the first device, upon the first encryption key and the first decryption key that are used for data transmission, and agree with the second device, upon the second encryption key and the corresponding second decryption key that are used for data transmission.

In this way, validity of the intermediate device is verified first, and on a basis that the intermediate device is valid, the first encryption key and the corresponding first decryption key are agreed upon. This may prevent the target data from being read by a malicious device (that is, an invalid intermediate device), and may further ensure security of the target data.

According to a third aspect, a data transmission method is provided, and the method includes:
receiving, by a second device, a second data transmission message sent by an intermediate device and carrying second data, where the second data is data obtained after target data that undergoes data processing by the intermediate device is encrypted; and
performing, by the second device based on a second decryption key agreed upon between the second device and the intermediate device, decryption processing on the second data to obtain the target data that undergoes data processing by the intermediate device.

After the intermediate device sends the second data transmission message carrying the second data to the second device, the second device may receive the second data transmission message sent by the intermediate device, and parse the second data transmission message to obtain the second data carried in the second data transmission message, where the second data is data obtained after the target data that undergoes data processing by the intermediate device is encrypted by using a second encryption key. The second device may prestore a decryption key (that is, the second decryption key) agreed upon between the second device and the intermediate device, where the second decryption key may be used to perform decryption processing on the second data sent by the intermediate device. After receiving the second data, the second device may determine whether the target data is data that the intermediate device is allowed to read, that is, determine whether the second data is the data obtained after the target data that undergoes preset data processing by the intermediate device is encrypted. When the second device determines that the target data is the data that the intermediate device is allowed to read, the second device may perform, based on the second decryption key, decryption processing on the second data to obtain the target data that undergoes data processing by the intermediate device. The data obtained by the second device may be consistent with the target data, or may be inconsistent with the target data. Whether the data is the same depends on whether data processing performed by the intermediate device on the target data changes the target data. In addition, the second device may further prestore a decryption algorithm (which may be referred to as a second decryption algorithm). To be specific, after obtaining the second data, the second device may perform, based on the second decryption key and the second decryption algorithm that are agreed upon between the second device and the intermediate device, decryption processing on the second data to obtain the target data that undergoes data processing by the intermediate device.

With reference to the third aspect, in a first possible implementation of the third aspect, the second data transmission message further carries a first preset identifier, and the first preset identifier is used to indicate that the intermediate device is allowed to read the target data; and
the performing, by the second device based on a second decryption key agreed upon between the second device and the intermediate device, decryption processing on the second data to obtain the target data that undergoes data processing by the intermediate device includes:
when the second device determines that the second data transmission message carries the first preset identifier, performing, by the second device based on the second decryption key agreed upon between the second device and the intermediate device, decryption processing on the second data to obtain the target data that undergoes data processing by the intermediate device.

After obtaining the second data transmission message, the second device may determine whether the second data transmission message carries the first preset identifier, and when determining that the second data transmission message carries the first preset identifier, that is, when determining that the second data carried in the second data transmission message is the data obtained after the target data that undergoes data processing by the intermediate device is encrypted, the second device may perform, based on the second decryption key agreed upon between the second device and the intermediate device, decryption processing on the second data to obtain the target data that undergoes data processing by the intermediate device.

In this way, a data transmission message may carry a corresponding preset identifier, so that the intermediate device and the second device can easily learn an encryption key on which first data sent by the first device is based. Therefore, efficiency of determining a decryption key may be improved.

With reference to the first possible implementation of the third aspect, in a second possible implementation of the third aspect, the method further includes:
receiving, by the second device, a third data transmission message sent by the intermediate device and carrying third data and a second preset identifier, where the second preset identifier is used to indicate that the intermediate device is not allowed to read the target data, and the third data is the target data encrypted by using a third encryption key; and
when the second device determines that the third data transmission message carries the second preset identifier, performing, by the second device based on a third decryption key agreed upon between the second device and the first device, decryption processing on the third data to obtain the target data.

After the intermediate device sends the third data transmission message carrying the third data and the second preset identifier to the second device, the second device may receive the third data transmission message sent by the intermediate device, and may parse the third data transmission message to obtain the third data and the second preset identifier carried in the third data transmission message, where the third data is the target data encrypted by using the third encryption key. The second device may prestore a decryption key (that is, the third decryption key) agreed upon between the second device and the first device, where the third decryption key may be used to perform decryption processing on the third data sent by the first device through the intermediate device. After receiving the third data transmission message, the second device may determine whether the third data transmission message carries the second preset identifier, and when determining that the third data transmission message carries the second preset identifier, that is, when determining that the third data carried in the third data transmission message is data obtained after the first device encrypts the target data based on the third encryption key and that the intermediate device does not perform any processing on the target data, the second device may perform, based on the third decryption key agreed upon between the second device and the first device, decryption processing on the third data to obtain the target data. In addition, the second device may further prestore a decryption algorithm (which may be referred to as a third decryption algorithm). To be specific, when determining that the third data transmission message carries the second preset identifier, the second device may perform, based on the third decryption key and the third decryption algorithm that are agreed upon between the second device and the first device, decryption processing on the third data to obtain the target data.

This may enable the intermediate device to work normally if the target data is the data that the intermediate device is allowed to read, or may ensure security of the target data if the target data is data that the intermediate device is not allowed to read.

With reference to the second possible implementation of the third aspect, in a third possible implementation of the third aspect, the first preset identifier or the second preset identifier is set in a Transport Layer Security TLS header; or
the first preset identifier or the second preset identifier is set in a User Datagram Protocol Based Quick Internet Transport Layer QUIC header.

With reference to the third aspect, in a fourth possible implementation of the third aspect, the method further includes:
receiving, by the second device, a verification request sent by the intermediate device and carrying device information of the intermediate device;
verifying, by the second device, validity of the intermediate device based on the device information of the intermediate device; and
if the intermediate device is valid, sending, by the second device to a first device through the intermediate device, a feedback message used to indicate that the intermediate device is valid, and agreeing with the intermediate device, upon the second decryption key and a corresponding second encryption key that are used for data transmission.

After the intermediate device sends the verification request to the second device, the second device may receive the verification request sent by the intermediate device, and may parse the verification request to obtain the device information of the intermediate device that is carried in the verification request.

After obtaining the device information of the intermediate device, the second device may verify validity of the intermediate device based on a preset processing policy. Specifically, after obtaining the device information of the intermediate device, that is, after obtaining a device identifier, data processing function information (which may be text information describing a data processing function of the intermediate device), and a certificate of the intermediate device, where the certificate is issued by a specific organization for the intermediate device and may be obtained after the data processing function information of the intermediate device is encrypted based on a private key, the second device may obtain a public key corresponding to the intermediate device, and decrypt the certificate based on the obtained public key. If the certificate can be decrypted correctly, and the data processing function information obtained through decryption is the same as the data processing function information carried in the verification request, the second device may determine that the intermediate device is valid. In addition, the second device may further store an operation that the second device allows the intermediate device to perform. On a basis of the foregoing determining, validity of the intermediate device is verified with reference to the operation that the second device allows the intermediate device to perform.

After validity of the intermediate device is verified, if the intermediate device is valid, the second device may send, to the first device through the intermediate device, the feedback message corresponding to the verification request sent by the intermediate device, where the feedback message may be used to indicate that the intermediate device is valid. Specifically, the second device may send, to the intermediate device, the feedback message corresponding to the verification request sent by the intermediate device, where the feedback message may carry the device identifier of the valid intermediate device. In addition, the second device may perform integrity protection processing on the feedback message. The second device may further agree with the intermediate device, upon the second decryption key and the corresponding second encryption key that are used for data transmission.

In this way, validity of the intermediate device is verified first, and on a basis that the intermediate device is valid, a first encryption key and a corresponding first decryption key are agreed upon. This may prevent the target data from being read by a malicious device (that is, an invalid intermediate device), and may further ensure security of the target data.

According to a fourth aspect, a first device is provided, and the first device includes a processor and a transmitter, where
the processor is configured to: obtain target data to be transmitted to a second device; and if the target data is data that an intermediate device is allowed to read, perform, based on a first encryption key agreed upon between the first device and the intermediate device, encryption processing on the target data to obtain first data; and
the transmitter is configured to send a first data transmission message carrying the first data to the intermediate device.

With reference to the fourth aspect, in a first possible implementation of the fourth aspect, the first data transmission message further carries a first preset identifier, and the first preset identifier is used to indicate that the intermediate device is allowed to read the target data.

With reference to the first possible implementation of the fourth aspect, in a second possible implementation of the fourth aspect, the processor is further configured to:
if the target data is data that the intermediate device is not allowed to read, perform, based on a third encryption key agreed upon between the first device and the second device, encryption processing on the target data to obtain third data; and
the transmitter is further configured to:
   send a third data transmission message carrying the third data and a second preset identifier to the intermediate device, where the second preset identifier is used to indicate that the intermediate device is not allowed to read the target data.

With reference to the second possible implementation of the fourth aspect, in a third possible implementation of the fourth aspect, the first preset identifier or the second preset identifier is set in a Transport Layer Security TLS header; or
the first preset identifier or the second preset identifier is set in a User Datagram Protocol Based Quick Internet Transport Layer QUIC header.

With reference to the fourth aspect, in a fourth possible implementation of the fourth aspect, the transmitter is further configured to:
send a verification instruction message to the intermediate device, where the verification instruction message is used to instruct the intermediate device to send, to the second device, a verification request used to verify validity of the intermediate device;
the first device further includes:
   a receiver, configured to receive a feedback message sent by the intermediate device and used to indicate that the intermediate device is valid; and
   the processor is further configured to:
      agree with the intermediate device, upon the first encryption key and a corresponding first decryption key that are used for data transmission.

According to a fifth aspect, an intermediate device is provided, and the intermediate device includes a receiver, a processor, and a transmitter, where
the receiver is configured to receive a first data transmission message sent by a first device and carrying first data, where the first data is target data encrypted by using a first encryption key;
the processor is configured to perform, based on a first decryption key agreed upon between the intermediate device and the first device, decryption processing on the first data to obtain the target data, and perform preset data processing on the target data; and perform, based on a second encryption key agreed upon between the intermediate device and a second device, encryption processing on the target data that undergoes data processing, to obtain second data; and
the transmitter is configured to send a second data transmission message carrying the second data to the second device.

With reference to the fifth aspect, in a first possible implementation of the fifth aspect, the first data transmission message further carries a first preset identifier, and the first preset identifier is used to indicate that the intermediate device is allowed to read the target data;
the processor is specifically configured to:
when the processor determines that the first data transmission message carries the first preset identifier, perform, based on the first decryption key agreed upon between the intermediate device and the first device, decryption processing on the first data to obtain the target data, and perform preset data processing on the target data; and
the transmitter is specifically configured to:
   send the second data transmission message carrying the second data and the first preset identifier to the second device.

With reference to the first possible implementation of the fifth aspect, in a second possible implementation of the fifth aspect, the receiver is further configured to:
receive a third data transmission message sent by the first device and carrying third data and a second preset identifier, where the second preset identifier is used to indicate that the intermediate device is not allowed to read the target data, and the third data is the target data encrypted by using a third encryption key; and
the transmitter is further configured to:
   when the processor determines that the third data transmission message carries the second preset identifier, send the third data transmission message to the second device.

With reference to the second possible implementation of the fifth aspect, in a third possible implementation of the fifth aspect, the first preset identifier or the second preset identifier is set in a Transport Layer Security TLS header; or
the first preset identifier or the second preset identifier is set in a User Datagram Protocol Based Quick Internet Transport Layer QUIC header.

With reference to the fifth aspect, in a fourth possible implementation of the fifth aspect, the receiver is further configured to:
receive a verification instruction message sent by the first device;
the transmitter is further configured to:
   send a verification request carrying device information of the intermediate device to the second device;
   the receiver is further configured to:
      receive a feedback message sent by the second device and used to indicate that the intermediate device is valid;
      the transmitter is further configured to:
         send, to the first device, the feedback message sent by the second device and used to indicate that the intermediate device is valid; and
         the processor is further configured to:
            agree with the first device, upon the first encryption key and the first decryption key that are used for data transmission, and agree with the second device, upon the second encryption key and a corresponding second decryption key that are used for data transmission.

According to a sixth aspect, a second device is provided, and the second device includes a receiver and a processor, where
the receiver is configured to receive a second data transmission message sent by an intermediate device and carrying second data, where the second data is data obtained after target data that undergoes data processing by the intermediate device is encrypted; and
the processor is configured to perform, based on a second decryption key agreed upon between the second device and the intermediate device, decryption processing on the second data to obtain the target data that undergoes data processing by the intermediate device.

With reference to the sixth aspect, in a first possible implementation of the sixth aspect, the second data transmission message further carries a first preset identifier, and the first preset identifier is used to indicate that the intermediate device is allowed to read the target data; and
the processor is specifically configured to:
when the processor determines that the second data transmission message carries the first preset identifier, perform, based on the second decryption key agreed upon between the second device and the intermediate device, decryption processing on the second data to obtain the target data that undergoes data processing by the intermediate device.

With reference to the first possible implementation of the sixth aspect, in a second possible implementation of the sixth aspect, the receiver is further configured to:
receive a third data transmission message sent by the intermediate device and carrying third data and a second preset identifier, where the second preset identifier is used to indicate that the intermediate device is not allowed to read the target data, and the third data is the target data encrypted by using a third encryption key; and
the processor is further configured to:
   when the processor determines that the third data transmission message carries the second preset identifier, perform, based on a third decryption key agreed upon between the second device and the first device, decryption processing on the third data to obtain the target data.

With reference to the second possible implementation of the sixth aspect, in a third possible implementation of the sixth aspect, the first preset identifier or the second preset identifier is set in a Transport Layer Security TLS header; or
the first preset identifier or the second preset identifier is set in a User Datagram Protocol Based Quick Internet Transport Layer QUIC header.

With reference to the sixth aspect, in a fourth possible implementation of the sixth aspect, the receiver is further configured to:
receive a verification request sent by the intermediate device and carrying device information of the intermediate device;
the processor is further configured to:
   verify validity of the intermediate device based on the device information of the intermediate device;
   the second device further includes:
      a transmitter, configured to send, to a first device through the intermediate device if the intermediate device is valid, a feedback message used to indicate that the intermediate device is valid; and
      the processor is further configured to:
         agree with the intermediate device, upon the second decryption key and a corresponding second encryption key that are used for data transmission.

According to a seventh aspect, a first device is provided, and the first device includes:
an obtaining module, which may be specifically implemented by a processor, and configured to obtain target data to be transmitted to a second device;
an encryption module, which may be specifically implemented by the processor, and configured to: if the target data is data that an intermediate device is allowed to read, perform, based on a first encryption key agreed upon between the first device and the intermediate device, encryption processing on the target data to obtain first data; and
a sending module, which may be specifically implemented by a transmitter, and configured to send a first data transmission message carrying the first data to the intermediate device.

With reference to the seventh aspect, in a first possible implementation of the seventh aspect, the first data transmission message further carries a first preset identifier, and the first preset identifier is used to indicate that the intermediate device is allowed to read the target data.

With reference to the first possible implementation of the seventh aspect, in a second possible implementation of the seventh aspect, the encryption module is further configured to:
if the target data is data that the intermediate device is not allowed to read, perform, based on a third encryption key agreed upon between the first device and the second device, encryption processing on the target data to obtain third data; and
the sending module is further configured to:
   send a third data transmission message carrying the third data and a second preset identifier to the intermediate device, where the second preset identifier is used to indicate that the intermediate device is not allowed to read the target data.

With reference to the second possible implementation of the seventh aspect, in a third possible implementation of the seventh aspect, the first preset identifier or the second preset identifier is set in a Transport Layer Security TLS header; or
the first preset identifier or the second preset identifier is set in a User Datagram Protocol Based Quick Internet Transport Layer QUIC header.

With reference to the seventh aspect, in a fourth possible implementation of the seventh aspect, the sending module is further configured to:
send a verification instruction message to the intermediate device, where the verification instruction message is used to instruct the intermediate device to send, to the second device, a verification request used to verify validity of the intermediate device; and
the first device further includes:
   a receiving module, configured to receive a feedback message sent by the intermediate device and used to indicate that the intermediate device is valid; and
   an agreement module, configured to agree with the intermediate device, upon the first encryption key and a corresponding first decryption key that are used for data transmission.

According to an eighth aspect, an intermediate device is provided, and the intermediate device includes:
a receiving module, which may be specifically implemented by a receiver, and configured to receive a first data transmission message sent by a first device and carrying first data, where the first data is target data encrypted by using a first encryption key;
a decryption module, which may be specifically implemented by a processor, and configured to perform, based on a first decryption key agreed upon between the intermediate device and the first device, decryption processing on the first data to obtain the target data, and perform preset data processing on the target data;
an encryption module, which may be specifically implemented by the processor, and configured to perform, based on a second encryption key agreed upon between the intermediate device and a second device, encryption processing on the target data that undergoes data processing, to obtain second data; and
a sending module, which may be specifically implemented by a transmitter, and configured to send a second data transmission message carrying the second data to the second device.

With reference to the eighth aspect, in a first possible implementation of the eighth aspect, the first data transmission message further carries a first preset identifier, and the first preset identifier is used to indicate that the intermediate device is allowed to read the target data;
the decryption module is specifically configured to:
when it is determined that the first data transmission message carries the first preset identifier, perform, based on the first decryption key agreed upon between the intermediate device and the first device, decryption processing on the first data to obtain the target data, and perform preset data processing on the target data; and
the sending module is specifically configured to:
   send the second data transmission message carrying the second data and the first preset identifier to the second device.

With reference to the first possible implementation of the eighth aspect, in a second possible implementation of the eighth aspect, the receiving module is further configured to:
receive a third data transmission message sent by the first device and carrying third data and a second preset identifier, where the second preset identifier is used to indicate that the intermediate device is not allowed to read the target data, and the third data is the target data encrypted by using a third encryption key; and
the sending module is further configured to:
   when it is determined that the third data transmission message carries the second preset identifier, send the third data transmission message to the second device.

With reference to the second possible implementation of the eighth aspect, in a third possible implementation of the eighth aspect, the first preset identifier or the second preset identifier is set in a Transport Layer Security TLS header; or
the first preset identifier or the second preset identifier is set in a User Datagram Protocol Based Quick Internet Transport Layer QUIC header.

With reference to the eighth aspect, in a fourth possible implementation of the eighth aspect, the receiving module is further configured to:
receive a verification instruction message sent by the first device;
the sending module is further configured to:
   send a verification request carrying device information of the intermediate device to the second device;
   the receiving module is further configured to:
      receive a feedback message sent by the second device and used to indicate that the intermediate device is valid;
      the sending module is further configured to:
         send, to the first device, the feedback message sent by the second device and used to indicate that the intermediate device is valid; and
         the intermediate device further includes:
            an agreement module, configured to agree with the first device, upon the first encryption key and the first decryption key that are used for data transmission, and agree with the second device, upon the second encryption key and a corresponding second decryption key that are used for data transmission.

According to a ninth aspect, a second device is provided, and the second device includes:
a receiving module, which may be specifically implemented by a receiver, and configured to receive a second data transmission message sent by an intermediate device and carrying second data, where the second data is data obtained after target data that undergoes data processing by the intermediate device is encrypted; and
a decryption module, which may be specifically implemented by a processor, and configured to perform, based on a second decryption key agreed upon between the second device and the intermediate device, decryption processing on the second data to obtain the target data that undergoes data processing by the intermediate device.

With reference to the ninth aspect, in a first possible implementation of the ninth aspect, the second data transmission message further carries a first preset identifier, and the first preset identifier is used to indicate that the intermediate device is allowed to read the target data; and
the decryption module is specifically configured to:
when it is determined that the second data transmission message carries the first preset identifier, perform, based on the second decryption key agreed upon between the second device and the intermediate device, decryption processing on the second data to obtain the target data that undergoes data processing by the intermediate device.

With reference to the first possible implementation of the ninth aspect, in a second possible implementation of the ninth aspect, the receiving module is further configured to:
receive a third data transmission message sent by the intermediate device and carrying third data and a second preset identifier, where the second preset identifier is used to indicate that the intermediate device is not allowed to read the target data, and the third data is the target data encrypted by using a third encryption key; and
the decryption module is further configured to:
   when it is determined that the third data transmission message carries the second preset identifier, perform, based on a third decryption key agreed upon between the second device and the first device, decryption processing on the third data to obtain the target data.

With reference to the second possible implementation of the ninth aspect, in a third possible implementation of the ninth aspect, the first preset identifier or the second preset identifier is set in a Transport Layer Security TLS header; or
the first preset identifier or the second preset identifier is set in a User Datagram Protocol Based Quick Internet Transport Layer QUIC header.

With reference to the ninth aspect, in a fourth possible implementation of the ninth aspect, the receiving module is further configured to:
receive a verification request sent by the intermediate device and carrying device information of the intermediate device; and
the second device further includes:
   a verification module, configured to verify validity of the intermediate device based on the device information of the intermediate device;
   a sending module, configured to send, to a first device through the intermediate device if the intermediate device is valid, a feedback message used to indicate that the intermediate device is valid; and
   an agreement module, configured to agree with the intermediate device, upon the second decryption key and a corresponding second encryption key that are used for data transmission.

According to a tenth aspect, a data transmission system is provided, and the system includes a first device, an intermediate device, and a second device, where
the first device is configured to obtain target data to be transmitted to the second device, and if the target data is data that the intermediate device is allowed to read, perform, based on a first encryption key agreed upon between the first device and the intermediate device, encryption processing on the target data to obtain first data, and send a first data transmission message carrying the first data to the intermediate device;
the intermediate device is configured to receive the first data transmission message sent by the first device and carrying the first data, perform, based on a first decryption key agreed upon between the intermediate device and the first device, decryption processing on the first data to obtain the target data, perform preset data processing on the target data, perform, based on a second encryption key agreed upon between the intermediate device and the second device, encryption processing on the target data that undergoes data processing, to obtain second data, and send a second data transmission message carrying the second data to the second device; and
the second device is configured to receive the second data transmission message sent by the intermediate device and carrying the second data, and perform, based on a second decryption key agreed upon between the second device and the intermediate device, decryption processing on the second data to obtain the target data that undergoes data processing by the intermediate device.

The technical solutions provided by the embodiments of the present invention have the following beneficial effects:

In the embodiments of the present invention, when the target data to be sent by the first device to the second device needs to be encrypted, the first device may perform encryption processing on the target data by using the first encryption key agreed upon between the first device and the intermediate device, and then send the target data to the intermediate device; after receiving the target data encrypted by using the first encryption key and sent by the first device, the intermediate device may decrypt the target data by using the first decryption key agreed upon between the intermediate device and the first device, to obtain the target data, and perform preset data processing on the target data, and further, may encrypt, by using the second encryption key agreed upon between the intermediate device and the second device, the target data that undergoes data processing, and send the target data to the second device; and after receiving the data sent by the intermediate device, the second device may perform decryption processing by using the second decryption key agreed upon between the second device and the intermediate device, to obtain the target device that undergoes data processing by the intermediate device. In this way, the intermediate device may decrypt, based on the decryption key pre-agreed upon between the intermediate device and the first device, the data sent by the first device, and may read the data to be sent by the first device to the second device, and may further perform preset data processing on the target data. This may enable the intermediate device to work normally.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may derive other drawings from these accompanying drawings without creative efforts.
FIG. 1 is a schematic architectural diagram of a system according to an embodiment of the present invention;
FIG. 2 is a schematic structural diagram of a first device according to an embodiment of the present invention;
FIG. 3 is a schematic structural diagram of an intermediate device according to an embodiment of the present invention;
FIG. 4 is a schematic structural diagram of a second device according to an embodiment of the present invention;
FIG. 5 is a flowchart of a data transmission method according to an embodiment of the present invention;
FIG. 6 is a flowchart of a key agreement method according to an embodiment of the present invention;
FIG. 7 is a flowchart of a data transmission method according to an embodiment of the present invention;
FIG. 8 is a schematic structural diagram of a first device according to an embodiment of the present invention;
FIG. 9 is a schematic structural diagram of a first device according to an embodiment of the present invention;
FIG. 10 is a schematic structural diagram of an intermediate device according to an embodiment of the present invention;
FIG. 11 is a schematic structural diagram of an intermediate device according to an embodiment of the present invention;
FIG. 12 is a schematic structural diagram of a second device according to an embodiment of the present invention; and
FIG. 13 is a schematic structural diagram of a second device according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

An embodiment of the present invention provides a data transmission method, where the method may be jointly implemented by a first device, an intermediate device, and a second device. The first device and the second device may be respectively either of a terminal and a server. The terminal may be a mobile terminal such as a mobile phone or a tablet computer, or may be a PC (Personal Computer, personal computer). The server may be a server communicating with the terminal, or may be a back-end server of a service, for example, may be a web server. When the first device is the terminal, and the second device is the server, the following process is a process of sending target data by the terminal to the server. When the first device is the server, and the second device is the terminal, the following process is a process of sending target data by the server to the terminal. The intermediate device may be a device in a transmission path for transmitting data between the first device and the second device. The intermediate device has a preset data processing function, and may perform preset data processing on the data transmitted between the first device and the second device.

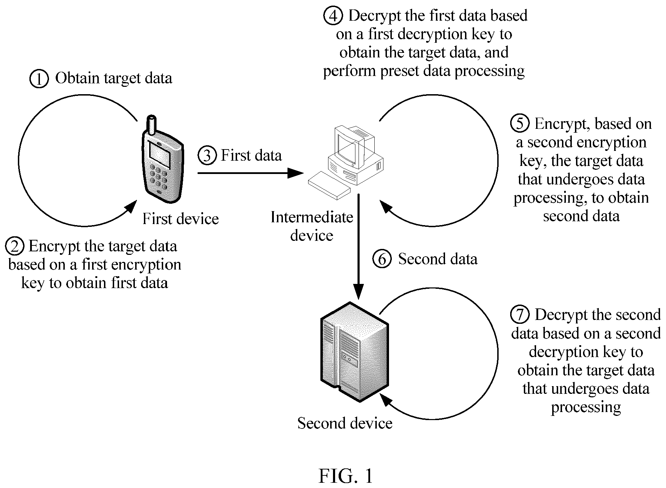

After obtaining target data to be transmitted to the second device, the first device may encrypt the target data based on a first encryption key agreed upon between the first device and the intermediate device, to obtain first data, and send a first data transmission message carrying the first data to the intermediate device. After receiving the first data transmission message sent by the first device and carrying the first data, the intermediate device may decrypt the first data based on a first decryption key agreed upon between the intermediate device and the first device, to obtain the target data, and may further perform preset data processing on the target data, encrypt, based on a second encryption key agreed upon between the intermediate device and the second device, the target data that undergoes data processing by the intermediate device, to obtain second data, and send a second data transmission message carrying the second data to the second device. After receiving the second data transmission message, the second device may decrypt the second data based on a second decryption key agreed upon between the intermediate device and the second device, to obtain the target data that undergoes data processing by the intermediate device. A schematic system diagram is shown in FIG. 1. In addition, the second device may send target data to the first device. A process thereof is the same as a process of sending target data by the first device to the second device. This embodiment of the present invention is described by using an example in which the first device sends the target data to the second device. Other cases are similar to this, and are not described again.

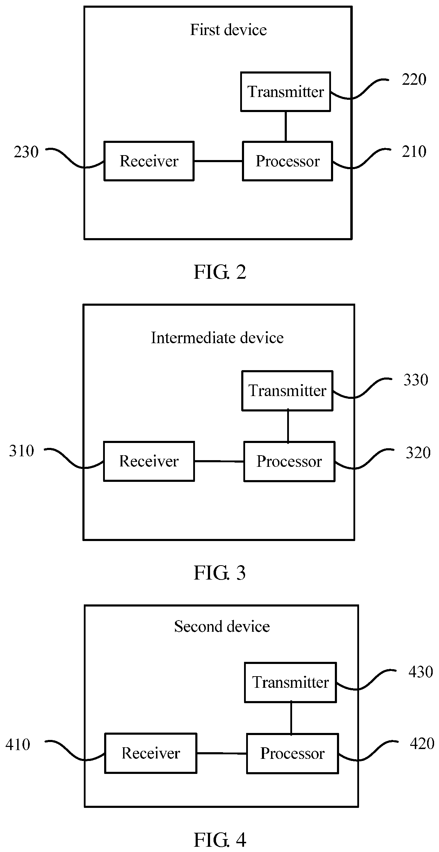

The first device may include a processor 210, a transmitter 220, and a receiver 230. The receiver 230 and the transmitter 220 may be respectively connected to the processor 210, as shown in FIG. 2. The receiver 230 may be configured to receive a message or data. The receiver 230 may include but is not limited to at least one amplifier, a tuner, one or more oscillators, a coupler, an LNA (Low Noise Amplifier, low noise amplifier), a duplexer, or the like. The transmitter 220 may be configured to send a message or data, that is, may send the first data transmission message carrying the first data. The processor 210 may be a control center of the first device, and connects each part of the first device by using various interfaces and lines, such as the receiver 230 and the transmitter 220. In the present invention, the processor 210 may be configured to perform encryption processing on the target data. Optionally, the processor 210 may include one or more processing units. Preferably, the processor 210 may integrate an application processor and a modem processor, where the application processor mainly processes an operating system, and the modem processor mainly processes wireless communication. The processor 210 may also be a digital signal processor, an application-specific integrated circuit, a field programmable gate array, another programmable logic device, or the like. The first device may further include a memory, where the memory may be configured to store a software program and modules, and the processor 210 executes various function applications and data processing of the first device by reading software code and the modules stored in the memory.

The intermediate device may include a receiver 310, a processor 320, and a transmitter 330. The transmitter 330 and the receiver 310 may be respectively connected to the processor 320, as shown in FIG. 3. The transmitter 330 may be configured to send a message or data. In the present invention, the transmitter 330 may be configured to send the second data transmission message carrying the second data. The transmitter 330 may include but is not limited to at least one amplifier, a tuner, one or more oscillators, a coupler, an LNA (Low Noise Amplifier, low noise amplifier), a duplexer, or the like. Similar to a structure of the transmitter 330, the receiver 310 may also include but is not limited to an antenna, at least one amplifier, a tuner, one or more oscillators, a coupler, an LNA (Low Noise Amplifier, low noise amplifier), a duplexer, or the like, and may be configured to receive data or a message. In the present invention, the receiver 310 may be configured to receive the first data transmission message sent by the first device and carrying the first data. The processor 320 may include one or more processing units. The processor 320 may be a general purpose processor, including a central processing unit (Central Processing Unit, CPU for short), a network processor (Network Processor, NP for short), or the like; or may be a digital signal processor (DSP), an application-specific integrated circuit (ASIC), a field-programmable gate array (FPGA), another programmable logic device, or the like. Specifically, a program may include program code, and the program code includes a computer operation instruction. The intermediate device may further include a memory, where the memory may be configured to store a software program and modules, and the processor 320 executes various function applications and data processing of the intermediate device by reading software code and the modules stored in the memory.

The second device may include a receiver 410, a processor 420, and a transmitter 430. The transmitter 430 and the receiver 410 may be respectively connected to the processor 420, as shown in FIG. 4. The transmitter 430 may be configured to send a message or data. The transmitter 430 may include but is not limited to at least one amplifier, a tuner, one or more oscillators, a coupler, an LNA (Low Noise Amplifier, low noise amplifier), a duplexer, or the like. Similar to a structure of the transmitter 430, the receiver 410 may also include but is not limited to an antenna, at least one amplifier, a tuner, one or more oscillators, a coupler, an LNA (Low Noise Amplifier, low noise amplifier), a duplexer, or the like, and may be configured to receive data or a message. In the present invention, the receiver 410 may be configured to receive the second data transmission message sent by the intermediate device and carrying the second data. The processor 420 may include one or more processing units. The processor 420 may be a general purpose processor, including a central processing unit (Central Processing Unit, CPU for short), a network processor (Network Processor, NP for short), or the like; or may be a digital signal processor (DSP), an application-specific integrated circuit (ASIC), a field-programmable gate array (FPGA), another programmable logic device, or the like. Specifically, a program may include program code, and the program code includes a computer operation instruction. The second device may further include a memory, where the memory may be configured to store a software program and modules, and the processor 420 executes various function applications and data processing of the second device by reading software code and the modules stored in the memory.

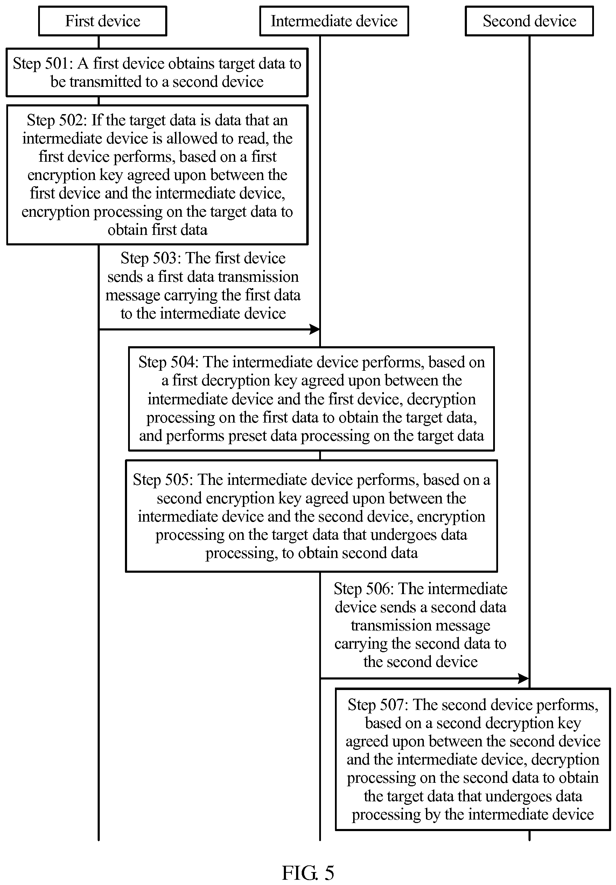

With reference to specific implementations, the following describes in detail a process shown in FIG. 5. Content may be as follows:
Step 501: A first device obtains target data to be transmitted to a second device.

The first device and the second device may be either of a terminal and a server. The first device may be the terminal, and the second device may be the server. The target data may be service data to be transmitted by the first device.

In an implementation, to ensure security of data transmission, more servers require that data to be transmitted to or from terminals should undergo encryption processing. To be specific, the TLS protocol or the QUIC (Quick UDP (User Datagram Protocol, User Datagram Protocol) Internet Connection, UDP Based Quick Internet Transport Layer) protocol is extensively applied. In this case, when the first device intends to send data to the second device, the first device may obtain the target data to be transmitted.

Step 502: If the target data is data that an intermediate device is allowed to read, the first device performs, based on a first encryption key agreed upon between the first device and the intermediate device, encryption processing on the target data to obtain first data.

The intermediate device may be a device having a preset data processing function, and may be a device in a transmission path during data transmission between the first device and the second device.

In an implementation, the first device may prestore a first determining policy, where the first determining policy may be used by the first device to determine whether the target data to be transmitted to the second device is the data that the intermediate device is allowed to read. The first device may store a data type list of data that the intermediate device is allowed to read, and/or may store a data type list of data that the intermediate device is not allowed to read. For example, when the first device is the terminal, and the target data is a password entered by a user, the intermediate device is not allowed to read the target data, or when the data is a video, the intermediate device is allowed to read the data. The first device may further prestore an encryption key (that is, the first encryption key) agreed upon between the first device and the intermediate device, where the first encryption key may be used to perform encryption processing on the target data.

After obtaining the target data, the first device may determine whether the target data is the data that the intermediate device is allowed to read. If the target data is the data that the intermediate device is allowed to read, the first device may perform, based on the prestored first encryption key, encryption processing on the target data to obtain the first data. The first device may further prestore an encryption algorithm (which may be referred to as a first encryption algorithm). To be specific, the first device may perform, based on the first encryption key and the first encryption algorithm that are agreed upon between the first device and the intermediate device, encryption processing on the target data to obtain the first data.

Step 503: The first device sends a first data transmission message carrying the first data to the intermediate device.

In an implementation, after obtaining the first data, the first device may send a data transmission message (that is, the first data transmission message) to the intermediate device, where the first data transmission message may further carry the first data.

Optionally, the first data transmission message further carries a first preset identifier, and the first preset identifier is used to indicate that the intermediate device is allowed to read the target data.

In an implementation, when the first device determines that the target data is the data that the intermediate device is allowed to read, the first data transmission message sent by the first device to the intermediate device may further carry a preset identifier (that is, the first preset identifier) used to indicate that the intermediate device is allowed to read the target data. For example, the first data transmission message may carry an identifier A. To be specific, when the first data transmission message carries the identifier A, it indicates that the target data to be transmitted by the first device is the data that the intermediate device is allowed to read. In addition, for the first preset identifier, integrity protection processing may be performed, but encryption processing is not performed.

Optionally, the first preset identifier may be set in a TLS header or a QUIC header. Specifically, the first preset identifier is set in the Transport Layer Control TLS header; or the first preset identifier is set in the User Datagram Protocol Based Quick Internet Transport Layer QUIC header.

In an implementation, when the first device transmits the target data to the second device, the first device may transmit the target data based on the TLS protocol, or may transmit the target data based on the QUIC protocol. For different cases respectively, the first preset identifier may be set in the TLS header or set in the QUIC header.

Correspondingly, the intermediate device receives the first data transmission message sent by the first device and carrying the first data, where the first data is the target data encrypted by using the first encryption key.

In an implementation, after the first device sends the first data transmission message to the intermediate device, the intermediate device may receive the first data transmission message sent by the first device, and may parse the first data transmission message to obtain the first data carried in the first data transmission message, where the first data is the target data encrypted by using the first encryption key.

Optionally, if the first data transmission message sent by the first device carries the first preset identifier, the first data transmission message received by the intermediate device may further carry the first preset identifier, where the first preset identifier is used to indicate that the intermediate device is allowed to read the target data. In addition, the first device may perform integrity protection processing on the first preset identifier without performing encryption processing. To be specific, the intermediate device may read the first preset identifier but cannot change the first preset identifier.

Optionally, the first preset identifier may be set in the TLS header or the QUIC header. Specifically, the first preset identifier is set in the Transport Layer Control TLS header; or the first preset identifier is set in the User Datagram Protocol Based Quick Internet Transport Layer QUIC header.

In an implementation, when the first device transmits the target data to the second device, the first device may transmit the target data based on the TLS protocol, or may transmit the target data based on the QUIC protocol. For different cases respectively, the first preset identifier may be set in the TLS header or set in the QUIC header.

Step 504: The intermediate device performs, based on a first decryption key agreed upon between the intermediate device and the first device, decryption processing on the first data to obtain the target data, and performs preset data processing on the target data.

In an implementation, the intermediate device may prestore a decryption key (that is, the first decryption key) agreed upon between the intermediate device and the first device, where the first decryption key may be used to perform decryption processing on the first data sent by the first device. After obtaining the first data, the intermediate device may determine whether the target data is the data that the intermediate device is allowed to read. When the target data is the data that the intermediate device is allowed to read, the intermediate device may perform, based on the prestored first decryption key agreed upon between the intermediate device and the first device, decryption processing on the first data to obtain the target data. The intermediate device may further prestore a decryption algorithm (which may be referred to as a first decryption algorithm). To be specific, the intermediate device may perform, based on the first decryption key and the first decryption algorithm that are agreed upon between the first device and the intermediate device, decryption processing on the first data to obtain the target data.

After obtaining the target data, the intermediate device may perform preset data processing on the obtained target data based on the data processing function of the intermediate device. Specifically, the intermediate device may have the preset data processing function, and the preset data processing function may be a data statistics function. In this case, for ease of collecting statics, the intermediate device may read the target data to be transmitted from the first device to the second device, without changing the target data. The preset data processing function may also be a video optimization function. In this case, the intermediate device may read the target data to be transmitted from the first device to the second device, and change the target data based on the preset data processing function. For example, the first device is the server, and the video optimization function is to change high definition video data to standard definition video data. In this case, the intermediate device may read the high definition video data (that is, the target data) sent by the server to the terminal, and may further change the target data to the standard definition video data. In other words, the data obtained after the intermediate device performs preset data processing on the target data may be the same as or different from the target data.

Optionally, if the first data transmission message further carries the first preset identifier, a process of step 504 may be as follows: When the intermediate device determines that the first data transmission message carries the first preset identifier, the intermediate device performs, based on the first decryption key agreed upon between the intermediate device and the first device, decryption processing on the first data to obtain the target data, and performs preset data processing on the target data.

In an implementation, after obtaining the first data transmission message, the intermediate device may determine whether the first data transmission message carries the first preset identifier. When the intermediate device determines that the first data transmission message carries the first preset identifier, the intermediate device may perform processing on the first data according to the process described in the foregoing step 504, that is, perform, based on the first decryption key agreed upon between the intermediate device and the first device, decryption processing on the first data to obtain the target data, and perform preset data processing on the target data.

Step 505: The intermediate device performs, based on a second encryption key agreed upon between the intermediate device and the second device, encryption processing on the target data that undergoes data processing, to obtain second data.

In an implementation, the intermediate device may prestore an encryption key (that is, the second encryption key) agreed upon between the intermediate device and the second device, where the second encryption key may be used to perform encryption processing on the target data that undergoes data processing. After performing preset data processing on the target data, the intermediate device may obtain the prestored second encryption key, and perform, based on the second encryption key, encryption processing on the target data that undergoes data processing, to obtain the second data. The intermediate device may further prestore an encryption algorithm (which may be referred to as a second encryption algorithm). To be specific, the intermediate device may perform, based on the second encryption key and the second encryption algorithm that are agreed upon between the intermediate device and the second device, encryption processing on the target data that undergoes data processing, to obtain the second data.

Step 506: The intermediate device sends a second data transmission message carrying the second data to the second device.

In an implementation, after obtaining the second data, the intermediate device may send a data transmission message (that is, the second data transmission message) to the second device, where the second data transmission message may carry the second data.

Optionally, if the first data transmission message carries the first preset identifier, a process of step 507 may be as follows: The intermediate device sends the second data transmission message carrying the second data and the first preset identifier to the second device.

In an implementation, when the first data transmission message carries the first preset identifier, the second data transmission message sent by the intermediate device to the second device may further carry the first preset identifier, that is, the second data transmission message carries the second data and the first preset identifier.

Correspondingly, the second device receives the second data transmission message sent by the intermediate device and carrying the second data, where the second data is data obtained after the target data that undergoes data processing by the intermediate device is encrypted.

In an implementation, after the intermediate device sends the second data transmission message carrying the second data to the second device, the second device may receive the second data transmission message sent by the intermediate device, and parse the second data transmission message to obtain the second data carried in the second data transmission message, where the second data is the data obtained after the target data that undergoes data processing by the intermediate device is encrypted by using the second encryption key.

Optionally, if the second data transmission message sent by the intermediate device carries the first preset identifier, the second data transmission message received by the second device may further carry the first preset identifier, where the first preset identifier is used to indicate that the intermediate device is allowed to read the target data.

Optionally, the first preset identifier may be set in a TLS header or a QUIC header. Specifically, the first preset identifier is set in the Transport Layer Control TLS header; or the first preset identifier is set in the User Datagram Protocol Based Quick Internet Transport Layer QUIC header.

In an implementation, when the first device transmits the target data to the second device, the first device may transmit the target data based on the TLS protocol, or may transmit the target data based on the QUIC protocol. For different cases respectively, the first preset identifier may be set in the TLS header or set in the QUIC header.

Step 507: The second device performs, based on a second decryption key agreed upon between the second device and the intermediate device, decryption processing on the second data to obtain the target data that undergoes data processing by the intermediate device.

In an implementation, the second device may prestore a decryption key (that is, the second decryption key) agreed upon between the second device and the intermediate device, where the second decryption key may be used to perform decryption processing on the second data sent by the intermediate device. After receiving the second data, the second device may determine whether the target data is the data that the intermediate device is allowed to read, that is, determine whether the second data is the data obtained after the target data that undergoes preset data processing by the intermediate device is encrypted. When the second device determines that the target data is the data that the intermediate device is allowed to read, the second device may perform, based on the second decryption key, decryption processing on the second data to obtain the target data that undergoes data processing by the intermediate device. The data obtained by the second device may be consistent with the target data, or may be inconsistent with the target data. Whether the data is the same depends on whether data processing performed by the intermediate device on the target data changes the target data. In addition, the second device may further prestore a decryption algorithm (which may be referred to as a second decryption algorithm). To be specific, after obtaining the second data, the second device may perform, based on the second decryption key and the second decryption algorithm that are agreed upon between the second device and the intermediate device, decryption processing on the second data to obtain the target data that undergoes data processing by the intermediate device.

Optionally, if the second data transmission message further carries the first preset identifier, correspondingly, a process of step 507 may be as follows: When the second device determines that the second data transmission message carries the first preset identifier, the second device performs, based on the second decryption key agreed upon between the second device and the intermediate device, decryption processing on the second data to obtain the target data that undergoes data processing by the intermediate device.

In an implementation, after obtaining the second data transmission message, the second device may determine whether the second data transmission message carries the first preset identifier, and when determining that the second data transmission message carries the first preset identifier, that is, when determining that the second data carried in the second data transmission message is the data obtained after the target data that undergoes data processing by the intermediate device is encrypted, the second device may perform processing on the second data according to the process described in the foregoing step 507, that is, perform, based on the second decryption key agreed upon between the second device and the intermediate device, decryption processing on the second data to obtain the target data that undergoes data processing by the intermediate device.

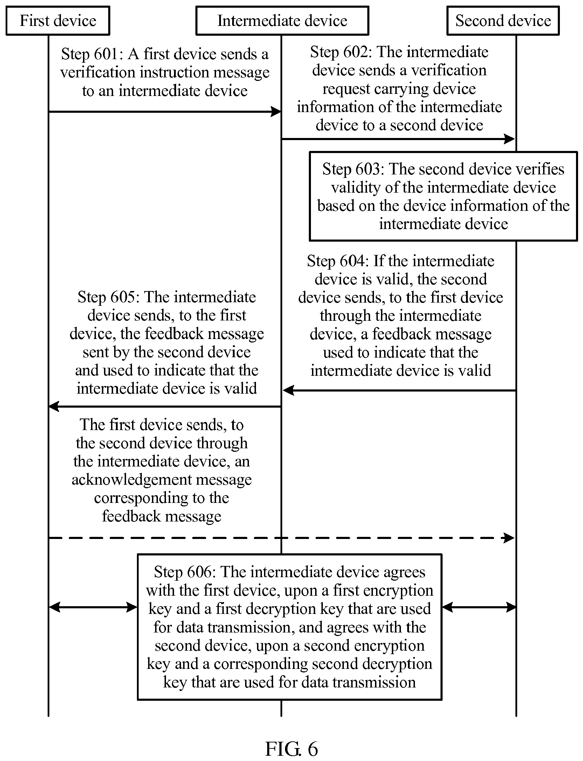

The first device, the intermediate device, and the second device may agree upon the foregoing keys before transmission of the target data. An embodiment of the present invention further provides a key agreement method. As shown in FIG. 6, a first device, an intermediate device, and a second device may agree upon the foregoing encryption keys and decryption keys by applying the method.

With reference to specific implementations, the following describes in detail a process shown in FIG. 6. Content may be as follows:
Step 601: A first device sends a verification instruction message to an intermediate device, where the verification instruction message is used to instruct the intermediate device to send, to a second device, a verification request used to verify validity of the intermediate device.

In an implementation, when data is transmitted between the first device and the second device, the data may be transmitted based on the TLS protocol, or the data may be transmitted based on the QUIC protocol. When the data is transmitted based on the TLS protocol, before the first device transmits the data to the second device, the first device may first establish a TCP (Transmission Control Protocol, Transmission Control Protocol) connection, that is, the first device performs a three-way TCP handshake with the second device, and then the first device establishes a TLS connection, where a process of establishing the TLS connection is a process of agreeing upon keys between the first device and the second device, that is, agreeing upon a third encryption key and a corresponding third decryption key that are used for data transmission in the following process. When the data is transmitted based on the QUIC protocol, before the first device transmits the data to the second device, the first device may first establish a QUIC connection.

When the first device transmits target data to the second device, the first device may send the verification instruction message to the intermediate device. The verification instruction message may be used to instruct the intermediate device to send, to the second device, the verification request used to verify validity of the intermediate device. For the foregoing two cases, if the target data is transmitted based on the TLS protocol, the verification instruction message may be sent in the process of establishing TLS or after the TLS connection is established; or if the target data is transmitted based on the QUIC protocol, the verification instruction message may be sent in the process of establishing the QUIC connection or after the QUIC connection is established. This is not limited in this embodiment of the present invention. In addition, device information of the intermediate device may be preset in the first device. The device information of the intermediate device may be a device identifier of the intermediate device (which may be a device name of the intermediate device, or may be a MAC address of the intermediate device, or may be an IP (Internet Protocol, Internet Protocol) address of the intermediate device), data processing function information (which may be text information describing a data processing function of the intermediate device), and a certificate. In this case, the verification instruction message may carry the device information of the intermediate device. Alternatively, device information of the intermediate device may not be preset in the first device. This is not limited in this embodiment of the present invention. In addition, the verification instruction message sent by the first device may be transmitted in a plaintext manner.

Correspondingly, the intermediate device receives the verification instruction message sent by the first device.

In an implementation, after the first device sends the verification instruction message to the intermediate device, the intermediate device may receive the verification instruction message sent by the first device. If the verification instruction message carries the device information of the intermediate device, after receiving the verification instruction message, the intermediate device may parse the verification instruction message to obtain the device information of the intermediate device that is carried in the verification instruction message.

Step 602: The intermediate device sends the verification request carrying device information of the intermediate device to the second device.

In an implementation, if the verification instruction message carries the device information of the intermediate device, after receiving the verification instruction message sent by the first device, the intermediate device may obtain the device information of the intermediate device that is carried in the verification instruction message, and send the verification request carrying the device information of the intermediate device to the second device. If the verification instruction message does not carry the device information of the intermediate device, that is, the device information of the intermediate device is not preconfigured in the first device, after receiving the verification instruction message sent by the first device, the intermediate device may obtain the locally prestored device information of the intermediate device, and send the verification request carrying the device information of the intermediate device to the second device. In addition, the verification request sent by the intermediate device may be transmitted in a plaintext manner.

Correspondingly, the second device receives the verification request sent by the intermediate device and carrying the device information of the intermediate device.

In an implementation, after the intermediate device sends the verification request to the second device, the second device may receive the verification request sent by the intermediate device, and parse the verification request to obtain the device information of the intermediate device that is carried in the verification request.

Step 603: The second device verifies validity of the intermediate device based on the device information of the intermediate device.

In an implementation, after obtaining the device information of the intermediate device, the second device may verify validity of the intermediate device based on a preset processing policy. Specifically, after the second device obtains the device information of the intermediate device, that is, after the second device obtains the device identifier, the data processing function information (which may be the text information describing the data processing function of the intermediate device), and the certificate of the intermediate device, where the certificate is issued by a specific organization for the intermediate device and may be obtained by the specific organization after the data processing function information of the intermediate device is encrypted based on a private key, the second device may obtain a public key corresponding to the intermediate device, and decrypt the certificate based on the obtained public key. If the certificate can be decrypted correctly, and the data processing function information obtained through decryption is the same as the data processing function information carried in the verification request, the second device may determine that the intermediate device is valid. In addition, the second device may further store an operation that the second device allows the intermediate device to perform. On a basis of the foregoing determining, validity of the intermediate device is verified with reference to the operation that the second device allows the intermediate device to perform. For example, when the data processing function of the intermediate device is video optimization, if the second device prestores data processing that the intermediate device having a video optimization function is allowed to perform on the transmitted data, on a basis that the data processing function information obtained through decryption is the same as the data processing function information carried in the verification request, the second device may determine that the intermediate device is valid; or if the second device prestores data processing that the intermediate device having a video optimization function is not allowed to perform on the transmitted data, even if the data processing function information obtained through decryption is the same as the data processing function information carried in the verification request, the second device determines that the intermediate device is invalid.

Step 604: If the intermediate device is valid, the second device sends, to the first device through the intermediate device, a feedback message used to indicate that the intermediate device is valid.

In an implementation, after the second device verifies validity of the intermediate device, if the intermediate device is valid, the second device may send, to the first device through the intermediate device, the feedback message corresponding to the verification request sent by the intermediate device, where the feedback message may be used to indicate that the intermediate device is valid. Specifically, the second device may send, to the intermediate device, the feedback message corresponding to the verification request sent by the intermediate device, where the feedback message may carry the device identifier of the valid intermediate device. In addition, the second device may perform integrity protection processing on the feedback message.

Step 605: The intermediate device receives the feedback message sent by the second device and used to indicate that the intermediate device is valid, and sends, to the first device, the feedback message sent by the second device and used to indicate that the intermediate device is valid.

In an implementation, after the second device sends the feedback message to the intermediate device, the intermediate device may receive the feedback message sent by the second device, where the feedback message may be used to indicate that the intermediate device is valid, and the intermediate device may further send, to the first device, the feedback message sent by the second device and used to indicate that the intermediate device is valid.

Correspondingly, the first device receives the feedback message sent by the intermediate device and used to indicate that the intermediate device is valid.

In an implementation, after the intermediate device sends, to the first device, the feedback message used to indicate that the intermediate device is valid, the first device may receive the feedback message.

In addition, after receiving the feedback message, the first device may send, to the second device through the intermediate device, an acknowledgement message corresponding to the feedback message, to notify the second device that the first device has received the feedback message used to indicate that the intermediate device is valid.

Step 606: The intermediate device agrees with the first device, upon a first encryption key and a first decryption key that are used for data transmission, and agrees with the second device, upon a second encryption key and a corresponding second decryption key that are used for data transmission.

In an implementation, if the intermediate device is valid, the first device, the intermediate device, and the second device may agree upon the foregoing encryption keys and decryption keys. To be specific, on a basis that the intermediate device is valid, the first device, the intermediate device, and the second device may agree upon the foregoing encryption keys and decryption keys. Specifically, the intermediate device may agree with the first device, upon the first encryption key and the first decryption key that are used for data transmission, and agree with the second device, upon the second encryption key and the corresponding second decryption key that are used for data transmission. When the intermediate device agrees with the first device, upon the first encryption key and the corresponding first decryption key that are used for data transmission, the operation may be initiated by the first device or may be initiated by the intermediate device. When the intermediate device agrees with the second device, upon the second encryption key and the corresponding second decryption key that are used for data transmission, the operation may be initiated by the second device or may be initiated by the intermediate device. This is not limited in this embodiment of the present invention. In addition, the intermediate device may further agree with the first device, upon a first encryption algorithm and a first decryption algorithm, and agree with the second device, upon a second encryption algorithm and a corresponding second decryption algorithm. In addition, on a basis of verifying validity of the intermediate device, the first device, the intermediate device, and the second device may further agree upon an encryption key and a decryption key that are required when the second device sends data to the first device through the intermediate device.

In addition, the first encryption key and the second encryption key may be the same or may be different, and the first decryption key and the second decryption key may be the same or may be different. This is not limited in this embodiment of the present invention.

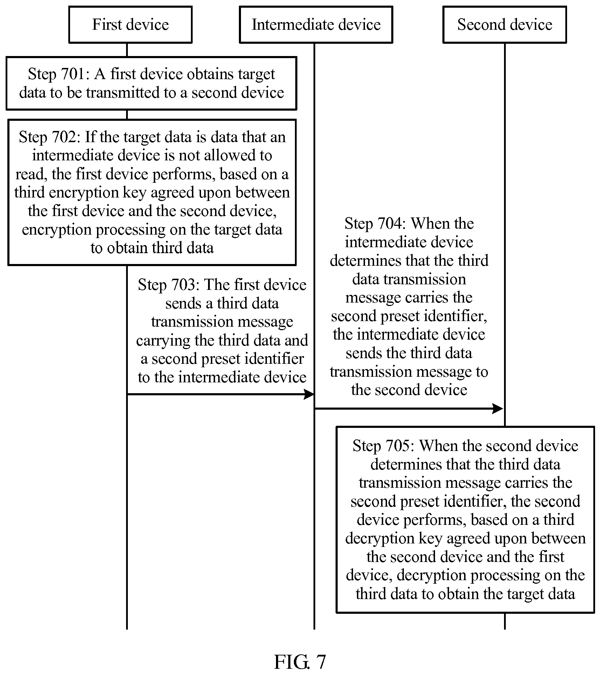

An embodiment of the present invention further provides a data transmission method if target data is data that an intermediate device is not allowed to read, as shown in FIG. 7.

With reference to specific implementations, the following describes in detail a process shown in FIG. 7. Content may be as follows:
Step 701: A first device obtains target data to be transmitted to a second device.

In an implementation, to ensure security of data transmission, more servers require that data to be transmitted to or from terminals should undergo encryption processing. To be specific, the TLS protocol or the QUIC (Quick UDP (User Datagram Protocol, User Datagram Protocol) Internet Connection, UDP Based Quick Internet Transport Layer) protocol is extensively applied. In this case, when the first device intends to send data to the second device, the first device may obtain the target data to be transmitted.

Step 702: If the target data is data that an intermediate device is not allowed to read, the first device performs, based on a third encryption key agreed upon between the first device and the second device, encryption processing on the target data to obtain third data.

In an implementation, the first device may prestore a first determining policy, where the first determining policy may be used by the first device to determine whether the target data to be transmitted to the second device is data that the intermediate device is allowed to read. The first device may store a data type list of data that the intermediate device is allowed to read, and/or may store a data type list of data that the intermediate device is not allowed to read. For example, when the first device is a terminal, and the target data is a password entered by a user, the intermediate device is not allowed to read the target data, or when the data is a video, the intermediate device is allowed to read the data. The first device may further prestore an encryption key (that is, the third encryption key) agreed upon between the first device and the second device, where the third encryption key may be used to perform encryption processing on the target data.

After obtaining the target data, the first device may determine whether the target data is the data that the intermediate device is allowed to read. If the target data is the data that the intermediate device is not allowed to read, the first device may perform, based on the prestored third encryption key, encryption processing on the target data to obtain the third data. The first device may further prestore an encryption algorithm (which may be referred to as a third encryption algorithm). To be specific, the first device may perform, based on the third encryption key and the third encryption algorithm that are agreed upon between the first device and the second device, encryption processing on the target data to obtain the third data.

Step 703: The first device sends a third data transmission message carrying the third data and a second preset identifier to the intermediate device, where the second preset identifier is used to indicate that the intermediate device is not allowed to read the target data.

In an implementation, in view of a case in which a first data transmission message carries a first preset identifier if the target data is the data that the intermediate device is allowed to read, when the first device determines that the target data is the data that the intermediate device is not allowed to read, the first device may send the third data transmission message carrying the third data and the second preset identifier to the intermediate device, where the second preset identifier may be used to indicate that the intermediate device is not allowed to read the target data. In addition, the first device may perform integrity protection processing on the second preset identifier.

Optionally, the second preset identifier may be set in a TLS header or a QUIC header. Specifically, the second preset identifier is set in the Transport Layer Control TLS header; or the second preset identifier is set in the User Datagram Protocol Based Quick Internet Transport Layer QUIC header.

In an implementation, when the first device transmits the target data to the second device, the first device may transmit the target data based on the TLS protocol, or may transmit the target data based on the QUIC protocol. For different cases respectively, the second preset identifier may be set in the TLS header or set in the QUIC header.

Correspondingly, the intermediate device receives the third data transmission message sent by the first device and carrying the third data and the second preset identifier, where the second preset identifier is used to indicate that the intermediate device is not allowed to read the target data, and the third data is the target data encrypted by using the third encryption key.

In an implementation, after the first device sends the third data transmission message carrying the third data and the second preset identifier to the intermediate device, the intermediate device may receive the third data transmission message sent by the first device, and parse the third data transmission message to obtain the third data and the second preset identifier carried in the third data transmission message, where the third data is the target data encrypted by using the third encryption key.

Step 704: When the intermediate device determines that the third data transmission message carries the second preset identifier, the intermediate device sends the third data transmission message to the second device.

In an implementation, after receiving the third data transmission message, the intermediate device may determine whether the third data transmission message carries the second preset identifier, and when determining that the third data transmission message carries the second preset identifier, that is, when the target data is the data that the intermediate device is not allowed to read, the intermediate device may forward the third data transmission message to the second device, without performing any processing on the third data.

Optionally, the second preset identifier may be set in the TLS header or the QUIC header. Specifically, the second preset identifier is set in the Transport Layer Control TLS header; or the second preset identifier is set in the User Datagram Protocol Based Quick Internet Transport Layer QUIC header.

In an implementation, when the first device transmits the target data to the second device, the first device may transmit the target data based on the TLS protocol, or may transmit the target data based on the QUIC protocol. For different cases respectively, the second preset identifier may be set in the TLS header or set in the QUIC header.

Correspondingly, the second device receives the third data transmission message sent by the intermediate device and carrying the third data and the second preset identifier, where the second preset identifier is used to indicate that the intermediate device is not allowed to read the target data, and the third data is the target data encrypted by using the third encryption key.

In an implementation, after the intermediate device sends the third data transmission message carrying the third data and the second preset identifier to the second device, the second device may receive the third data transmission message sent by the intermediate device, and parse the third data transmission message to obtain the third data and the second preset identifier carried in the third data transmission message, where the third data is the target data encrypted by using the third encryption key.

Optionally, the second preset identifier may be set in the TLS header or the QUIC header. Specifically, the second preset identifier is set in the Transport Layer Control TLS header; or the second preset identifier is set in the User Datagram Protocol Based Quick Internet Transport Layer QUIC header.

In an implementation, when the first device transmits the target data to the second device, the first device may transmit the target data based on the TLS protocol, or may transmit the target data based on the QUIC protocol. For different cases respectively, the second preset identifier may be set in the TLS header or set in the QUIC header.

Step 705: When the second device determines that the third data transmission message carries the second preset identifier, the second device performs, based on a third decryption key agreed upon between the second device and the first device, decryption processing on the third data to obtain the target data.

In an implementation, the second device may prestore a decryption key (that is, the third decryption key) agreed upon between the second device and the first device, where the third decryption key may be used to perform decryption processing on the third data sent by the first device through the intermediate device. After receiving the third data transmission message, the second device may determine whether the third data transmission message carries the second preset identifier, and when the second device determines that the third data transmission message carries the second preset identifier, that is, when the second device determines that the third data carried in the third data transmission message is the data obtained after the first device encrypts the target data based on the third encryption key and that the intermediate device does not perform any processing on the target data, the second device may perform, based on the third decryption key agreed upon between the second device and the first device, decryption processing on the third data to obtain the target data. In addition, the second device may further prestore a decryption algorithm (which may be referred to as a third decryption algorithm). To be specific, when the second device determines that the third data transmission message carries the second preset identifier, the second device may perform, based on the third decryption key and the third decryption algorithm that are agreed upon between the second device and the first device, decryption processing on the third data to obtain the target data.

In this embodiment of the present invention, when the target data to be sent by the first device to the second device needs to be encrypted, the first device may perform encryption processing on the target data by using a first encryption key agreed upon between the first device and the intermediate device, and then send the target data to the intermediate device; after receiving the target data encrypted by using the first encryption key and sent by the first device, the intermediate device may decrypt the target data by using a first decryption key agreed upon between the intermediate device and the first device, to obtain the target data, and perform preset data processing on the target data, and further, may encrypt, by using a second encryption key agreed upon between the intermediate device and the second device, the target data that undergoes data processing, and send the target data to the second device; and after receiving the data sent by the intermediate device, the second device may perform decryption processing by using a second decryption key agreed upon between the second device and the intermediate device, to obtain the target device that undergoes data processing by the intermediate device. In this way, the intermediate device may decrypt, based on the decryption key pre-agreed upon between the intermediate device and the first device, the data sent by the first device, and may read the data to be sent by the first device to the second device, and may further perform preset data processing on the target data. This may enable the intermediate device to work normally.

Based on a same idea, an embodiment of the present invention further provides a first device, as shown in FIG. 2. The first device provided by this embodiment may implement the processes of the embodiments shown in FIG. 5, FIG. 6, and FIG. 7. The first device includes a processor 210 and a transmitter 220.

The processor 210 is configured to: obtain target data to be transmitted to a second device; and if the target data is data that an intermediate device is allowed to read, perform, based on a first encryption key agreed upon between the first device and the intermediate device, encryption processing on the target data to obtain first data.

The transmitter 220 is configured to send a first data transmission message carrying the first data to the intermediate device.

The first device and the second device may be either of a terminal and a server. The first device may be the terminal, and the second device may be the server. The target data may be service data to be transmitted by the first device. The intermediate device may be a device having a preset data processing function, and may be a device in a transmission path during data transmission between the first device and the second device.

In an implementation, to ensure security of data transmission, more servers require that data to be transmitted to or from terminals should undergo encryption processing. To be specific, the TLS protocol or the QUIC (Quick UDP (User Datagram Protocol, User Datagram Protocol) Internet Connection, UDP Based Quick Internet Transport Layer) protocol is extensively applied. In this case, when the first device intends to send data to the second device, the processor 210 may obtain the target data to be transmitted.

The first device may prestore a first determining policy, where the first determining policy may be used by the first device to determine whether the target data to be transmitted to the second device is the data that the intermediate device is allowed to read. The first device may store a data type list of data that the intermediate device is allowed to read, and/or may store a data type list of data that the intermediate device is not allowed to read. For example, when the first device is the terminal, and the target data is a password entered by a user, the intermediate device is not allowed to read the target data, or when the data is a video, the intermediate device is allowed to read the data. The first device may further prestore an encryption key (that is, the first encryption key) agreed upon between the first device and the intermediate device, where the first encryption key may be used to perform encryption processing on the target data.

After obtaining the target data, the processor 210 may determine whether the target data is the data that the intermediate device is allowed to read. If the target data is the data that the intermediate device is allowed to read, the processor 210 may perform, based on the prestored first encryption key, encryption processing on the target data to obtain the first data. The first device may further prestore an encryption algorithm (which may be referred to as a first encryption algorithm). To be specific, the processor 210 may perform, based on the first encryption key and the first encryption algorithm that are agreed upon between the first device and the intermediate device, encryption processing on the target data to obtain the first data.

After the processor 210 obtains the first data, the transmitter 220 may send a data transmission message (that is, the first data transmission message) to the intermediate device, where the first data transmission message may further carry the first data.

Optionally, the first data transmission message further carries a first preset identifier, and the first preset identifier is used to indicate that the intermediate device is allowed to read the target data.

In an implementation, when it is determined that the target data is the data that the intermediate device is allowed to read, the first data transmission message sent by the transmitter 220 to the intermediate device may further carry a preset identifier (that is, the first preset identifier) used to indicate that the intermediate device is allowed to read the target data. For example, the first data transmission message may carry an identifier A. To be specific, when the first data transmission message carries the identifier A, it indicates that the target data to be transmitted by the first device is the data that the intermediate device is allowed to read. In addition, In addition, for the first preset identifier, integrity protection processing may be performed, but encryption processing is not performed.

Optionally, the processor 210 is further configured to:
if the target data is data that the intermediate device is not allowed to read, perform, based on a third encryption key agreed upon between the first device and the second device, encryption processing on the target data to obtain third data; and
the transmitter 220 is further configured to:
   send a third data transmission message carrying the third data and a second preset identifier to the intermediate device, where the second preset identifier is used to indicate that the intermediate device is not allowed to read the target data.

In an implementation, the first device may prestore the first determining policy, where the first determining policy may be used by the first device to determine whether the target data to be transmitted to the second device is the data that the intermediate device is allowed to read. The first device may store the data type list of data that the intermediate device is allowed to read, and/or may store the data type list of data that the intermediate device is not allowed to read. For example, when the first device is the terminal, and the target data is the password entered by the user, the intermediate device is not allowed to read the target data, or when the data is the video, the intermediate device is allowed to read the data. The first device may further prestore an encryption key (that is, the third encryption key) agreed upon between the first device and the second device, where the third encryption key may be used to perform encryption processing on the target data.

After obtaining the target data, the processor 210 may determine whether the target data is the data that the intermediate device is allowed to read. If the target data is the data that the intermediate device is not allowed to read, the processor 210 may perform, based on the prestored third encryption key, encryption processing on the target data to obtain the third data. The first device may further prestore an encryption algorithm (which may be referred to as a third encryption algorithm). To be specific, the processor 210 may perform, based on the third encryption key and the third encryption algorithm that are agreed upon between the first device and the second device, encryption processing on the target data to obtain the third data.

In view of a case in which the first data transmission message carries the first preset identifier if the target data is the data that the intermediate device is allowed to read, when the processor 210 determines that the target data is the data that the intermediate device is not allowed to read, the transmitter 220 may send the third data transmission message carrying the third data and the second preset identifier to the intermediate device, where the second preset identifier may be used to indicate that the intermediate device is not allowed to read the target data. In addition, the first device may perform integrity protection processing on the second preset identifier.

Optionally, the first preset identifier or the second preset identifier is set in a Transport Layer Security TLS header; or
the first preset identifier or the second preset identifier is set in a User Datagram Protocol Based Quick Internet Transport Layer QUIC header.

In an implementation, when the first device transmits the target data to the second device, the first device may transmit the target data based on the TLS protocol, or may transmit the target data based on the QUIC protocol. For different cases respectively, the first preset identifier or the second preset identifier may be set in the TLS header or set in the QUIC header.

Optionally, the transmitter 220 is further configured to:
send a verification instruction message to the intermediate device, where the verification instruction message is used to instruct the intermediate device to send, to the second device, a verification request used to verify validity of the intermediate device;
the first device further includes:
   a receiver 230, configured to receive a feedback message sent by the intermediate device and used to indicate that the intermediate device is valid; and
   the processor 210 is further configured to:
      agree with the intermediate device, upon the first encryption key and a corresponding first decryption key that are used for data transmission.

In an implementation, when the data is transmitted between the first device and the second device, the data may be transmitted based on the TLS protocol, or the data may be transmitted based on the QUIC protocol. When the data is transmitted based on the TLS protocol, before the first device transmits the data to the second device, the first device may first establish a TCP (Transmission Control Protocol, Transmission Control Protocol) connection, that is, the first device performs a three-way TCP handshake with the second device, and then the first device establishes a TLS connection, where a process of establishing the TLS connection is a process of agreeing upon keys between the first device and the second device, that is, agreeing upon the third encryption key and a corresponding third decryption key that are used for data transmission in the following process. When the data is transmitted based on the QUIC protocol, before the first device transmits the data to the second device, the first device may first establish a QUIC connection.

When the first device transmits the target data to the second device, the transmitter 220 may send the verification instruction message to the intermediate device. The verification instruction message may be used to instruct the intermediate device to send, to the second device, the verification request used to verify validity of the intermediate device. For the foregoing two cases, if the target data is transmitted based on the TLS protocol, the verification instruction message may be sent in the process of establishing TLS or after the TLS connection is established; or if the target data is transmitted based on the QUIC protocol, the verification instruction message may be sent in the process of establishing the QUIC connection or after the QUIC connection is established. This is not limited in this embodiment of the present invention. In addition, device information of the intermediate device may be preset in the first device. The device information of the intermediate device may be a device identifier of the intermediate device (which may be a device name of the intermediate device, or may be a MAC address of the intermediate device, or may be an IP (Internet Protocol, Internet Protocol) address of the intermediate device), data processing function information (which may be text information describing a data processing function of the intermediate device), and a certificate. In this case, the verification instruction message may carry the device information of the intermediate device. Alternatively, device information of the intermediate device may not be preset in the first device. This is not limited in this embodiment of the present invention. In addition, the verification instruction message sent by the first device may be transmitted in a plaintext manner.

After the transmitter 220 sends the verification instruction message to the intermediate device, the intermediate device may send, to the second device, the verification request used to verify validity of the intermediate device. After verifying that the intermediate device is valid, the second device may send, to the first device through the intermediate device, the feedback message used to indicate that the intermediate device is valid. The receiver 230 may receive the feedback message sent by the intermediate device and used to indicate that the intermediate device is valid. Further, the processor 210 may agree with the intermediate device, upon the first encryption key and the corresponding first decryption key that are used for data transmission.

Based on a same technical idea, an embodiment of the present invention further provides an intermediate device, as shown in FIG. 3. The intermediate device provided by this embodiment may implement the processes of the embodiments shown in FIG. 5, FIG. 6, and FIG. 7. The intermediate device includes a receiver 310, a processor 320, and a transmitter 330.

The receiver 310 is configured to receive a first data transmission message sent by a first device and carrying first data, where the first data is target data encrypted by using a first encryption key.

The processor 320 is configured to perform, based on a first decryption key agreed upon between the intermediate device and the first device, decryption processing on the first data to obtain the target data, and perform preset data processing on the target data; and perform, based on a second encryption key agreed upon between the intermediate device and a second device, encryption processing on the target data that undergoes data processing, to obtain second data.

The transmitter 330 is configured to send a second data transmission message carrying the second data to the second device.

In an implementation, after the first device sends the first data transmission message to the intermediate device, the receiver 310 may receive the first data transmission message sent by the first device, and the processor 320 may parse the first data transmission message to obtain the first data carried in the first data transmission message, where the first data is the target data encrypted by using the first encryption key.

The intermediate device may prestore a decryption key (that is, the first decryption key) agreed upon between the intermediate device and the first device, where the first decryption key may be used to perform decryption processing on the first data sent by the first device. After obtaining the first data, the processor 320 may determine whether the target data is data that the intermediate device is allowed to read. When the target data is the data that the intermediate device is allowed to read, the processor 320 may perform, based on the prestored first decryption key agreed upon between the intermediate device and the first device, decryption processing on the first data to obtain the target data. The intermediate device may further prestore a decryption algorithm (which may be referred to as a first decryption algorithm). To be specific, the processor 320 may perform, based on the first decryption key and the first decryption algorithm that are agreed upon between the first device and the intermediate device, decryption processing on the first data to obtain the target data.

After obtaining the target data, the processor 320 may perform preset data processing on the obtained target data based on a data processing function of the intermediate device. Specifically, the intermediate device may have a preset data processing function, and the preset data processing function may be a data statistics function. In this case, for ease of collecting statics, the processor 320 may read the target data to be transmitted from the first device to the second device, without changing the target data. The preset data processing function may also be a video optimization function. In this case, the processor 320 may read the target data to be transmitted from the first device to the second device, and change the target data based on the preset data processing function. For example, the first device is a server, and the video optimization function is to change high definition video data to standard definition video data. In this case, the processor 320 may read the high definition video data (that is, the target data) sent by the server to a terminal, and may further change the target data to the standard definition video data. In other words, the data obtained after the processor 320 performs preset data processing on the target data may be the same as or different from the target data.

The intermediate device may prestore an encryption key (that is, the second encryption key) agreed upon between the intermediate device and the second device, where the second encryption key may be used to perform encryption processing on the target data that undergoes data processing. After performing preset data processing on the target data, the processor 320 may obtain the prestored second encryption key, and perform, based on the second encryption key, encryption processing on the target data that undergoes data processing, to obtain the second data. The intermediate device may further prestore an encryption algorithm (which may be referred to as a second encryption algorithm). To be specific, the processor 320 may perform, based on the second encryption key and the second encryption algorithm that are agreed upon between the intermediate device and the second device, encryption processing on the target data that undergoes data processing, to obtain the second data. After the processor 320 obtains the second data, the transmitter 330 may send a data transmission message (that is, the second data transmission message) to the second device, where the second data transmission message may carry the second data.

Optionally, the first data transmission message further carries a first preset identifier, and the first preset identifier is used to indicate that the intermediate device is allowed to read the target data;
the processor 320 is specifically configured to:
when the processor determines that the first data transmission message carries the first preset identifier, perform, based on the first decryption key agreed upon between the intermediate device and the first device, decryption processing on the first data to obtain the target data, and perform preset data processing on the target data; and
the transmitter 330 is specifically configured to:
send the second data transmission message carrying the second data and the first preset identifier to the second device.

In an implementation, after the receiver 310 obtains the first data transmission message, the processor 320 may determine whether the first data transmission message carries the first preset identifier. When the processor 320 determines that the first data transmission message carries the first preset identifier, the processor 320 may perform processing on the first data according to the process described in the foregoing step 504, that is, perform, based on the first decryption key agreed upon between the intermediate device and the first device, decryption processing on the first data to obtain the target data, and perform preset data processing on the target data. When the first data transmission message carries the first preset identifier, the second data transmission message sent by the transmitter 330 to the second device may further carry the first preset identifier, that is, the second data transmission message carries the second data and the first preset identifier.

Optionally, the receiver 310 is further configured to:
receive a third data transmission message sent by the first device and carrying third data and a second preset identifier, where the second preset identifier is used to indicate that the intermediate device is not allowed to read the target data, and the third data is the target data encrypted by using a third encryption key; and
the transmitter 330 is further configured to:
   when the processor determines that the third data transmission message carries the second preset identifier, send the third data transmission message to the second device.

In an implementation, after the first device sends the third data transmission message carrying the third data and the second preset identifier to the intermediate device, the receiver 310 may receive the third data transmission message sent by the first device, and the processor 320 may parse the third data transmission message to obtain the third data and the second preset identifier carried in the third data transmission message, where the third data is the target data encrypted by using the third encryption key. After the receiver 310 receives the third data transmission message, whether the third data transmission message carries the second preset identifier may be determined. When it is determined that the third data transmission message carries the second preset identifier, that is, when the target data is data that the intermediate device is not allowed to read, the transmitter 330 may forward the third data transmission message to the second device, without performing any processing on the third data.

Optionally, the first preset identifier or the second preset identifier is set in a Transport Layer Security TLS header; or
the first preset identifier or the second preset identifier is set in a User Datagram Protocol Based Quick Internet Transport Layer QUIC header.

Optionally, the receiver 310 is further configured to:
receive a verification instruction message sent by the first device;
the transmitter 330 is further configured to:
   send a verification request carrying device information of the intermediate device to the second device;
   the receiver 310 is further configured to:
      receive a feedback message sent by the second device and used to indicate that the intermediate device is valid;
      the transmitter 330 is further configured to:
         send, to the first device, the feedback message sent by the second device and used to indicate that the intermediate device is valid; and
         the processor 320 is further configured to:
            agree with the first device, upon the first encryption key and the first decryption key that are used for data transmission, and agree with the second device, upon the second encryption key and a corresponding second decryption key that are used for data transmission.

In an implementation, after the first device sends the verification instruction message to the intermediate device, the receiver 310 may receive the verification instruction message sent by the first device. If the verification instruction message carries the device information of the intermediate device, after the receiver 310 receives the verification instruction message, the processor 320 may parse the verification instruction message to obtain the device information of the intermediate device that is carried in the verification instruction message.

If the verification instruction message carries the device information of the intermediate device, after the receiver 310 receives the verification instruction message sent by the first device, the processor 320 may obtain the device information of the intermediate device that is carried in the verification instruction message, and the transmitter 330 may send the verification request carrying the device information of the intermediate device to the second device. If the verification instruction message does not carry the device information of the intermediate device, that is, the device information of the intermediate device is not preconfigured in the first device, after the receiver 310 receives the verification instruction message sent by the first device, the processor 320 may obtain the locally prestored device information of the intermediate device, and the transmitter 330 sends the verification request carrying the device information of the intermediate device to the second device. In addition, the verification request sent by the intermediate device may be transmitted in a plaintext manner. After receiving the verification request, the second device may verify validity of the intermediate device. When the intermediate device is valid, the second device may send, to the intermediate device, the feedback message used to indicate that the intermediate device is valid. Further, the receiver 310 may receive the feedback message sent by the second device and used to indicate that the intermediate device is valid, and the transmitter 330 may send, to the first device, the feedback message sent by the second device and used to indicate that the intermediate device is valid. Further, the processor 320 may agree with the first device, upon the first encryption key and the first decryption key that are used for data transmission, and agree with the second device, upon the second encryption key and the corresponding second decryption key that are used for data transmission.

Based on a same technical idea, an embodiment of the present invention further provides a second device, as shown in FIG. 4. The second device provided by this embodiment may implement the processes of the embodiments shown in FIG. 5, FIG. 6, and FIG. 7. The second device includes a receiver 410 and a processor 420.

The receiver 410 is configured to receive a second data transmission message sent by an intermediate device and carrying second data, where the second data is data obtained after target data that undergoes data processing by the intermediate device is encrypted.

The processor 420 is configured to perform, based on a second decryption key agreed upon between the second device and the intermediate device, decryption processing on the second data to obtain the target data that undergoes data processing by the intermediate device.

In an implementation, after the intermediate device sends the second data transmission message carrying the second data to the second device, the receiver 410 may receive the second data transmission message sent by the intermediate device, and the processor 420 may parse the second data transmission message to obtain the second data carried in the second data transmission message, where the second data is data obtained after the target data that undergoes data processing by the intermediate device is encrypted by using a second encryption key.

The second device may prestore a decryption key (that is, the second decryption key) agreed upon between the second device and the intermediate device, where the second decryption key may be used to perform decryption processing on the second data sent by the intermediate device. After the receiver 410 receives the second data, the processor 420 may determine whether the target data is data that the intermediate device is allowed to read, that is, determine whether the second data is the data obtained after the target data that undergoes preset data processing by the intermediate device is encrypted. When the processor 420 determines that the target data is the data that the intermediate device is allowed to read, the processor 420 may perform, based on the second decryption key, decryption processing on the second data to obtain the target data that undergoes data processing by the intermediate device. The data obtained by the second device may be consistent with the target data, or may be inconsistent with the target data. Whether the data is the same depends on whether data processing performed by the intermediate device on the target data changes the target data. In addition, the second device may further prestore a decryption algorithm (which may be referred to as a second decryption algorithm). To be specific, after obtaining the second data, the processor 420 may perform, based on the second decryption key and the second decryption algorithm that are agreed upon between the second device and the intermediate device, decryption processing on the second data to obtain the target data that undergoes data processing by the intermediate device.

Optionally, the second data transmission message further carries a first preset identifier, and the first preset identifier is used to indicate that the intermediate device is allowed to read the target data; and
the processor 420 is specifically configured to:
when the processor determines that the second data transmission message carries the first preset identifier, perform, based on the second decryption key agreed upon between the second device and the intermediate device, decryption processing on the second data to obtain the target data that undergoes data processing by the intermediate device.

In an implementation, after the receiver 410 obtains the second data transmission message, the processor 420 may determine whether the second data transmission message carries the first preset identifier, and when determining that the second data transmission message carries the first preset identifier, that is, when determining that the second data carried in the second data transmission message is the data obtained after the target data that undergoes data processing by the intermediate device is encrypted, the processor 420 may perform processing on the second data according to the process described in the foregoing step 507, that is, perform, based on the second decryption key agreed upon between the second device and the intermediate device, decryption processing on the second data to obtain the target data that undergoes data processing by the intermediate device.

Optionally, the receiver 410 is further configured to:
receive a third data transmission message sent by the intermediate device and carrying third data and a second preset identifier, where the second preset identifier is used to indicate that the intermediate device is not allowed to read the target data, and the third data is the target data encrypted by using a third encryption key; and
the processor 420 is further configured to:
   when the processor determines that the third data transmission message carries the second preset identifier, perform, based on a third decryption key agreed upon between the second device and the first device, decryption processing on the third data to obtain the target data.

In an implementation, after the intermediate device sends the third data transmission message carrying the third data and the second preset identifier to the second device, the receiver 410 may receive the third data transmission message sent by the intermediate device, and the processor 420 may parse the third data transmission message to obtain the third data and the second preset identifier carried in the third data transmission message, where the third data is the target data encrypted by using the third encryption key. The second device may prestore a decryption key (that is, the third decryption key) agreed upon between the second device and the first device, where the third decryption key may be used to perform decryption processing on the third data sent by the first device through the intermediate device. After the receiver 410 receives the third data transmission message, the processor 410 may determine whether the third data transmission message carries the second preset identifier, and when determining that the third data transmission message carries the second preset identifier, that is, when determining that the third data carried in the third data transmission message is data obtained after the first device encrypts the target data based on the third encryption key and that the intermediate device does not perform any processing on the target data, the processor 420 may perform, based on the third decryption key agreed upon between the second device and the first device, decryption processing on the third data to obtain the target data. In addition, the second device may further prestore a decryption algorithm (which may be referred to as a third decryption algorithm). To be specific, when determining that the third data transmission message carries the second preset identifier, the processor 420 may perform, based on the third decryption key and the third decryption algorithm that are agreed upon between the second device and the first device, decryption processing on the third data to obtain the target data.

Optionally, the first preset identifier or the second preset identifier is set in a Transport Layer Security TLS header; or
the first preset identifier or the second preset identifier is set in a User Datagram Protocol Based Quick Internet Transport Layer QUIC header.

Optionally, the receiver 410 is further configured to:
receive a verification request sent by the intermediate device and carrying device information of the intermediate device;
the processor 420 is further configured to:
   verify validity of the intermediate device based on the device information of the intermediate device;
   the second device further includes:
      a transmitter 430, configured to send, to a first device through the intermediate device if the intermediate device is valid, a feedback message used to indicate that the intermediate device is valid; and
      the processor 420 is further configured to:
         agree with the intermediate device, upon the second decryption key and a corresponding second encryption key that are used for data transmission.

In an implementation, after the intermediate device sends the verification request to the second device, the receiver 410 may receive the verification request sent by the intermediate device, and the processor 420 may parse the verification request to obtain the device information of the intermediate device that is carried in the verification request.

After obtaining the device information of the intermediate device, the processor 420 may verify validity of the intermediate device based on a preset processing policy. Specifically, after obtaining the device information of the intermediate device, that is, after obtaining a device identifier, data processing function information (which may be text information describing a data processing function of the intermediate device), and a certificate of the intermediate device, where the certificate is issued by a specific organization for the intermediate device and may be obtained after the data processing function information of the intermediate device is encrypted based on a private key, the processor 420 may obtain a public key corresponding to the intermediate device, and decrypt the certificate based on the obtained public key. If the certificate can be decrypted correctly, and the data processing function information obtained through decryption is the same as the data processing function information carried in the verification request, the processor 420 may determine that the intermediate device is valid. In addition, the second device may further store an operation that the second device allows the intermediate device to perform. On a basis of the foregoing determining, validity of the intermediate device is verified with reference to the operation that the second device allows the intermediate device to perform. For example, when the data processing function of the intermediate device is video optimization, if the second device prestores data processing that the intermediate device having a video optimization function is allowed to perform on the transmitted data, on a basis that the data processing function information obtained through decryption is the same as the data processing function information carried in the verification request, the processor 420 may determine that the intermediate device is valid; or if the second device prestores data processing that the intermediate device having a video optimization function is not allowed to perform on the transmitted data, even if the data processing function information obtained through decryption is the same as the data processing function information carried in the verification request, the processor 420 determines that the intermediate device is invalid.

After the processor 420 verifies validity of the intermediate device, if the intermediate device is valid, the transmitter 430 may send, to the first device through the intermediate device, the feedback message corresponding to the verification request sent by the intermediate device, where the feedback message may be used to indicate that the intermediate device is valid. Specifically, the transmitter 430 may send, to the intermediate device, the feedback message corresponding to the verification request sent by the intermediate device, where the feedback message may carry the device identifier of the valid intermediate device. In addition, the second device may perform integrity protection processing on the feedback message. The processor 420 may further agree with the intermediate device, upon the second decryption key and the corresponding second encryption key that are used for data transmission.

In this embodiment of the present invention, when the target data to be sent by the first device to the second device needs to be encrypted, the first device may perform encryption processing on the target data by using a first encryption key agreed upon between the first device and the intermediate device, and then send the target data to the intermediate device; after receiving the target data encrypted by using the first encryption key and sent by the first device, the intermediate device may decrypt the target data by using a first decryption key agreed upon between the intermediate device and the first device, to obtain the target data, and perform preset data processing on the target data, and further, may encrypt, by using the second encryption key agreed upon between the intermediate device and the second device, the target data that undergoes data processing, and send the target data to the second device; and after receiving the data sent by the intermediate device, the second device may perform decryption processing by using the second decryption key agreed upon between the second device and the intermediate device, to obtain the target device that undergoes data processing by the intermediate device. In this way, the intermediate device may decrypt, based on the decryption key pre-agreed upon between the intermediate device and the first device, the data sent by the first device, and may read the data to be sent by the first device to the second device, and may further perform preset data processing on the target data. This may enable the intermediate device to work normally.

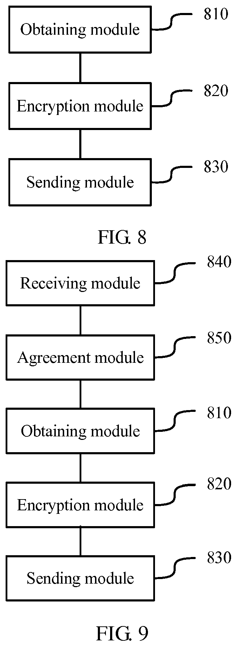

Based on a same technical idea, an embodiment of the present invention provides a first device, as shown in FIG. 8. The first device provided by this embodiment may implement the processes of the embodiments shown in FIG. 5, FIG. 6, and FIG. 7. The first device includes:
an obtaining module 810, configured to obtain target data to be transmitted to a second device;
an encryption module 820, configured to: if the target data is data that an intermediate device is allowed to read, perform, based on a first encryption key agreed upon between the first device and the intermediate device, encryption processing on the target data to obtain first data; and
a sending module 830, configured to send a first data transmission message carrying the first data to the intermediate device.

The first device and the second device may be either of a terminal and a server. The first device may be the terminal, and the second device may be the server. The target data may be service data to be transmitted by the first device. The intermediate device may be a device having a preset data processing function, and may be a device in a transmission path during data transmission between the first device and the second device.

In an implementation, to ensure security of data transmission, more servers require that data to be transmitted to or from terminals should undergo encryption processing. To be specific, the TLS protocol or the QUIC (Quick UDP (User Datagram Protocol, User Datagram Protocol) Internet Connection, UDP Based Quick Internet Transport Layer) protocol is extensively applied. In this case, when the first device intends to send data to the second device, the obtaining module 810 may obtain the target data to be transmitted.

The first device may prestore a first determining policy, where the first determining policy may be used by the first device to determine whether the target data to be transmitted to the second device is the data that the intermediate device is allowed to read. The first device may store a data type list of data that the intermediate device is allowed to read, and/or may store a data type list of data that the intermediate device is not allowed to read. For example, when the first device is the terminal, and the target data is a password entered by a user, the intermediate device is not allowed to read the target data, or when the data is a video, the intermediate device is allowed to read the data. The first device may further prestore an encryption key (that is, the first encryption key) agreed upon between the first device and the intermediate device, where the first encryption key may be used to perform encryption processing on the target data.

After the target data is obtained, whether the target data is the data that the intermediate device is allowed to read may be determined. If the target data is the data that the intermediate device is allowed to read, the encryption module 820 may perform, based on the prestored first encryption key, encryption processing on the target data to obtain the first data. The first device may further prestore an encryption algorithm (which may be referred to as a first encryption algorithm). To be specific, the encryption module 820 may perform, based on the first encryption key and the first encryption algorithm that are agreed upon between the first device and the intermediate device, encryption processing on the target data to obtain the first data.

After the encryption module 820 obtains the first data, the sending module 830 may send a data transmission message (that is, the first data transmission message) to the intermediate device, where the first data transmission message may further carry the first data.

Optionally, the first data transmission message further carries a first preset identifier, and the first preset identifier is used to indicate that the intermediate device is allowed to read the target data.

Optionally, the encryption module 820 is further configured to:
if the target data is data that the intermediate device is not allowed to read, perform, based on a third encryption key agreed upon between the first device and the second device, encryption processing on the target data to obtain third data; and
the sending module 830 is further configured to:
   send a third data transmission message carrying the third data and a second preset identifier to the intermediate device, where the second preset identifier is used to indicate that the intermediate device is not allowed to read the target data.

In an implementation, the first device may prestore the first determining policy, where the first determining policy may be used by the first device to determine whether the target data to be transmitted to the second device is the data that the intermediate device is allowed to read. The first device may store the data type list of data that the intermediate device is allowed to read, and/or may store the data type list of data that the intermediate device is not allowed to read. For example, when the first device is the terminal, and the target data is the password entered by the user, the intermediate device is not allowed to read the target data, or when the data is the video, the intermediate device is allowed to read the data. The first device may further prestore an encryption key (that is, the third encryption key) agreed upon between the first device and the second device, where the third encryption key may be used to perform encryption processing on the target data.

After the target data is obtained, whether the target data is the data that the intermediate device is allowed to read may be determined. If the target data is the data that the intermediate device is not allowed to read, the encryption module 820 may perform, based on the prestored third encryption key, encryption processing on the target data to obtain the third data. The first device may further prestore an encryption algorithm (which may be referred to as a third encryption algorithm). To be specific, the encryption module 820 may perform, based on the third encryption key and the third encryption algorithm that are agreed upon between the first device and the second device, encryption processing on the target data to obtain the third data.

In view of a case in which the first data transmission message carries the first preset identifier if the target data is the data that the intermediate device is allowed to read, when it is determined that the target data is the data that the intermediate device is not allowed to read, the sending module 830 may send the third data transmission message carrying the third data and the second preset identifier to the intermediate device, where the second preset identifier may be used to indicate that the intermediate device is not allowed to read the target data. In addition, the first device may perform integrity protection processing on the second preset identifier.

Optionally, the first preset identifier or the second preset identifier is set in a Transport Layer Security TLS header; or
the first preset identifier or the second preset identifier is set in a User Datagram Protocol Based Quick Internet Transport Layer QUIC header.

Optionally, the sending module 830 is further configured to:
send a verification instruction message to the intermediate device, where the verification instruction message is used to instruct the intermediate device to send, to the second device, a verification request used to verify validity of the intermediate device; and
as shown in FIG. 9, the first device further includes:
   a receiving module 840, configured to receive a feedback message sent by the intermediate device and used to indicate that the intermediate device is valid; and
   an agreement module 850, configured to agree with the intermediate device, upon the first encryption key and a corresponding first decryption key that are used for data transmission.

In an implementation, when the data is transmitted between the first device and the second device, the data may be transmitted based on the TLS protocol, or the data may be transmitted based on the QUIC protocol. When the data is transmitted based on the TLS protocol, before the first device transmits the data to the second device, the first device may first establish a TCP (Transmission Control Protocol, Transmission Control Protocol) connection, that is, the first device performs a three-way TCP handshake with the second device, and then the first device establishes a TLS connection, where a process of establishing the TLS connection is a process of agreeing upon keys between the first device and the second device, that is, agreeing upon the third encryption key and a corresponding third decryption key that are used for data transmission in the following process. When the data is transmitted based on the QUIC protocol, before the first device transmits the data to the second device, the first device may first establish a QUIC connection.

When the first device transmits the target data to the second device, the sending module 830 may send the verification instruction message to the intermediate device. The verification instruction message may be used to instruct the intermediate device to send, to the second device, the verification request used to verify validity of the intermediate device. For the foregoing two cases, if the target data is transmitted based on the TLS protocol, the verification instruction message may be sent in the process of establishing TLS or after the TLS connection is established; or if the target data is transmitted based on the QUIC protocol, the verification instruction message may be sent in the process of establishing the QUIC connection or after the QUIC connection is established. This is not limited in this embodiment of the present invention. In addition, device information of the intermediate device may be preset in the first device. The device information of the intermediate device may be a device identifier of the intermediate device (which may be a device name of the intermediate device, or may be a MAC address of the intermediate device, or may be an IP (Internet Protocol, Internet Protocol) address of the intermediate device), data processing function information (which may be text information describing a data processing function of the intermediate device), and a certificate. In this case, the verification instruction message may carry the device information of the intermediate device. Alternatively, device information of the intermediate device may not be preset in the first device. This is not limited in this embodiment of the present invention. In addition, the verification instruction message sent by the first device may be transmitted in a plaintext manner.

After the sending module 830 sends the verification instruction message to the intermediate device, the intermediate device may send, to the second device, the verification request used to verify validity of the intermediate device. After verifying that the intermediate device is valid, the second device may send, to the first device through the intermediate device, the feedback message used to indicate that the intermediate device is valid. The receiving module 840 may receive the feedback message sent by the intermediate device and used to indicate that the intermediate device is valid. Further, the agreement module 850 may agree with the intermediate device, upon the first encryption key and the corresponding first decryption key that are used for data transmission.

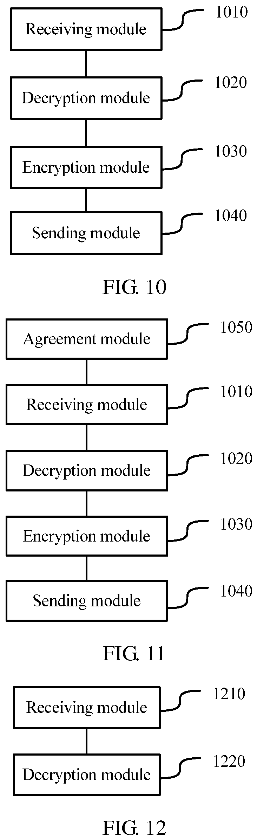

Based on a same technical idea, an embodiment of the present invention further provides an intermediate device, as shown in FIG. 10. The intermediate device provided by this embodiment may implement the processes of the embodiments shown in FIG. 5, FIG. 6, and FIG. 7. The intermediate device includes:
a receiving module 1010, configured to receive a first data transmission message sent by a first device and carrying first data, where the first data is target data encrypted by using a first encryption key;
a decryption module 1020, configured to perform, based on a first decryption key agreed upon between the intermediate device and the first device, decryption processing on the first data to obtain the target data, and perform preset data processing on the target data;
an encryption module 1030, configured to perform, based on a second encryption key agreed upon between the intermediate device and a second device, encryption processing on the target data that undergoes data processing, to obtain second data; and
a sending module 1040, configured to send a second data transmission message carrying the second data to the second device.

In an implementation, after the first device sends the first data transmission message to the intermediate device, the receiving module 1010 may receive the first data transmission message sent by the first device, and the intermediate device may parse the first data transmission message to obtain the first data carried in the first data transmission message, where the first data is the target data encrypted by using the first encryption key.

The intermediate device may prestore a decryption key (that is, the first decryption key) agreed upon between the intermediate device and the first device, where the first decryption key may be used to perform decryption processing on the first data sent by the first device. After the first data is obtained, whether the target data is data that the intermediate device is allowed to read may be determined. When the target data is the data that the intermediate device is allowed to read, the decryption module 1020 may perform, based on the prestored first decryption key agreed upon between the intermediate device and the first device, decryption processing on the first data to obtain the target data. The intermediate device may further prestore a decryption algorithm (which may be referred to as a first decryption algorithm). To be specific, the decryption module 1020 may perform, based on the first decryption key and the first decryption algorithm that are agreed upon between the first device and the intermediate device, decryption processing on the first data to obtain the target data.

After obtaining the target data, the decryption module 1020 may perform preset data processing on the obtained target data based on a preset data processing function. Specifically, the intermediate device may have the preset data processing function, and the preset data processing function may be a data statistics function. In this case, for ease of collecting statics, the processor 320 may read the target data to be transmitted from the first device to the second device, without changing the target data. The preset data processing function may also be a video optimization function. In this case, the decryption module 1020 may read the target data to be transmitted from the first device to the second device, and change the target data based on the preset data processing function. For example, the first device is a server, and the video optimization function is to change high definition video data to standard definition video data. In this case, the decryption module 1020 may read the high definition video data (that is, the target data) sent by the server to a terminal, and may further change the target data to the standard definition video data. In other words, the data obtained after the decryption module 1020 performs preset data processing on the target data may be the same as or different from the target data.

The intermediate device may prestore an encryption key (that is, the second encryption key) agreed upon between the intermediate device and the second device, where the second encryption key may be used to perform encryption processing on the target data that undergoes data processing. After preset data processing is performed on the target data, the encryption module 1030 may obtain the prestored second encryption key, and perform, based on the second encryption key, encryption processing on the target data that undergoes data processing, to obtain the second data. The intermediate device may further prestore an encryption algorithm (which may be referred to as a second encryption algorithm). To be specific, the encryption module 1030 may perform, based on the second encryption key and the second encryption algorithm that are agreed upon between the intermediate device and the second device, encryption processing on the target data that undergoes data processing, to obtain the second data. After the encryption module 1030 obtains the second data, the sending module 1040 may send a data transmission message (that is, the second data transmission message) to the second device, where the second data transmission message may carry the second data.

Optionally, the first data transmission message further carries a first preset identifier, and the first preset identifier is used to indicate that the intermediate device is allowed to read the target data;
the decryption module 1020 is specifically configured to:
when it is determined that the first data transmission message carries the first preset identifier, perform, based on the first decryption key agreed upon between the intermediate device and the first device, decryption processing on the first data to obtain the target data, and perform preset data processing on the target data; and
the sending module 1040 is specifically configured to:
   send the second data transmission message carrying the second data and the first preset identifier to the second device.

In an implementation, after the receiving module 1010 obtains the first data transmission message, the intermediate device may determine whether the first data transmission message carries the first preset identifier. When it is determined that the first data transmission message carries the first preset identifier, the decryption module 1020 may perform processing on the first data according to the process described in the foregoing step 504, that is, perform, based on the first decryption key agreed upon between the intermediate device and the first device, decryption processing on the first data to obtain the target data, and perform preset data processing on the target data. When the first data transmission message carries the first preset identifier, the second data transmission message sent by the sending module 1040 to the second device may further carry the first preset identifier, that is, the second data transmission message carries the second data and the first preset identifier.

Optionally, the receiving module 1010 is further configured to:
receive a third data transmission message sent by the first device and carrying third data and a second preset identifier, where the second preset identifier is used to indicate that the intermediate device is not allowed to read the target data, and the third data is the target data encrypted by using a third encryption key; and
the sending module 1040 is further configured to:
   when it is determined that the third data transmission message carries the second preset identifier, send the third data transmission message to the second device.

In an implementation, after the first device sends the third data transmission message carrying the third data and the second preset identifier to the intermediate device, the receiving module 1010 may receive the third data transmission message sent by the first device, and the intermediate device may parse the third data transmission message to obtain the third data and the second preset identifier carried in the third data transmission message, where the third data is the target data encrypted by using the third encryption key. After the third data transmission message is received, whether the third data transmission message carries the second preset identifier may be determined. When it is determined that the third data transmission message carries the second preset identifier, that is, when the target data is data that the intermediate device is not allowed to read, the sending module 1040 may forward the third data transmission message to the second device, without performing any processing on the third data.

Optionally, the first preset identifier or the second preset identifier is set in a Transport Layer Security TLS header; or
the first preset identifier or the second preset identifier is set in a User Datagram Protocol Based Quick Internet Transport Layer QUIC header.

Optionally, the receiving module 1010 is further configured to:
receive a verification instruction message sent by the first device;
the sending module 1040 is further configured to:
   send a verification request carrying device information of the intermediate device to the second device;
   the receiving module 1010 is further configured to:
      receive a feedback message sent by the second device and used to indicate that the intermediate device is valid;
      the sending module 1040 is further configured to:
         send, to the first device, the feedback message sent by the second device and used to indicate that the intermediate device is valid; and
         as shown in FIG. 11, the intermediate device further includes:
            an agreement module 1150, configured to agree with the first device, upon the first encryption key and the first decryption key that are used for data transmission, and agree with the second device, upon the second encryption key and a corresponding second decryption key that are used for data transmission.

In an implementation, after the first device sends the verification instruction message to the intermediate device, the receiving module 1010 may receive the verification instruction message sent by the first device. If the verification instruction message carries the device information of the intermediate device, after the receiving module 1010 receives the verification instruction message, the intermediate device may parse the verification instruction message to obtain the device information of the intermediate device that is carried in the verification instruction message.

If the verification instruction message carries the device information of the intermediate device, after the verification instruction message sent by the first device is received, the device information of the intermediate device that is carried in the verification instruction message may be obtained, and the sending module 1040 may send the verification request carrying the device information of the intermediate device to the second device. If the verification instruction message does not carry the device information of the intermediate device, that is, the device information of the intermediate device is not preconfigured in the first device, after the receiving module 1010 receives the verification instruction message sent by the first device, the intermediate device may obtain the locally prestored device information of the intermediate device, and the sending module 1040 sends the verification request carrying the device information of the intermediate device to the second device. In addition, the verification request sent by the intermediate device may be transmitted in a plaintext manner. After receiving the verification request, the second device may verify validity of the intermediate device. When the intermediate device is valid, the second device may send, to the intermediate device, the feedback message used to indicate that the intermediate device is valid. Further, the receiving module 1010 may receive the feedback message sent by the second device and used to indicate that the intermediate device is valid, and the sending module 1040 may send, to the first device, the feedback message sent by the second device and used to indicate that the intermediate device is valid. Further, the agreement module 1050 may agree with the first device, upon the first encryption key and the first decryption key that are used for data transmission, and agree with the second device, upon the second encryption key and the corresponding second decryption key that are used for data transmission.

Based on a same technical idea, an embodiment of the present invention provides a second device, as shown in FIG. 12. The second device provided by this embodiment may implement the processes of the embodiments shown in FIG. 5, FIG. 6, and FIG. 7. The second device includes:
a receiving module 1210, configured to receive a second data transmission message sent by an intermediate device and carrying second data, where the second data is data obtained after target data that undergoes data processing by the intermediate device is encrypted; and
a decryption module 1220, configured to perform, based on a second decryption key agreed upon between the second device and the intermediate device, decryption processing on the second data to obtain the target data that undergoes data processing by the intermediate device.

In an implementation, after the intermediate device sends the second data transmission message carrying the second data to the second device, the receiving module 1210 may receive the second data transmission message sent by the intermediate device, and the second device may parse the second data transmission message to obtain the second data carried in the second data transmission message, where the second data is data obtained after the target data that undergoes data processing by the intermediate device is encrypted by using a second encryption key.

The second device may prestore a decryption key (that is, the second decryption key) agreed upon between the second device and the intermediate device, where the second decryption key may be used to perform decryption processing on the second data sent by the intermediate device. After the receiving module 1210 receives the second data, the decryption module 1220 may determine whether the target data is data that the intermediate device is allowed to read, that is, determine whether the second data is the data obtained after the target data that undergoes preset data processing by the intermediate device is encrypted. When determining that the target data is the data that the intermediate device is allowed to read, the decryption module 1220 may perform, based on the second decryption key, decryption processing on the second data to obtain the target data that undergoes data processing by the intermediate device. The data obtained by the second device may be consistent with the target data, or may be inconsistent with the target data. Whether the data is the same depends on whether data processing performed by the intermediate device on the target data changes the target data. In addition, the second device may further prestore a decryption algorithm (which may be referred to as a second decryption algorithm). To be specific, after the second data is obtained, the decryption module 1220 may perform, based on the second decryption key and the second decryption algorithm that are agreed upon between the second device and the intermediate device, decryption processing on the second data to obtain the target data that undergoes data processing by the intermediate device.

Optionally, the second data transmission message further carries a first preset identifier, and the first preset identifier is used to indicate that the intermediate device is allowed to read the target data; and
the decryption module 1220 is specifically configured to:
when it is determined that the second data transmission message carries the first preset identifier, perform, based on the second decryption key agreed upon between the second device and the intermediate device, decryption processing on the second data to obtain the target data that undergoes data processing by the intermediate device.

In an implementation, after the receiving module 1210 obtains the second data transmission message, the decryption module 1220 may determine whether the second data transmission message carries the first preset identifier, and when determining that the second data transmission message carries the first preset identifier, that is, when determining that the second data carried in the second data transmission message is the data obtained after the target data that undergoes data processing by the intermediate device is encrypted, the decryption module 1220 may perform processing on the second data according to the process described in the foregoing step 507, that is, perform, based on the second decryption key agreed upon between the second device and the intermediate device, decryption processing on the second data to obtain the target data that undergoes data processing by the intermediate device.

Optionally, the receiving module 1210 is further configured to:
receive a third data transmission message sent by the intermediate device and carrying third data and a second preset identifier, where the second preset identifier is used to indicate that the intermediate device is not allowed to read the target data, and the third data is the target data encrypted by using a third encryption key; and
the decryption module 1220 is further configured to:
   when it is determined that the third data transmission message carries the second preset identifier, perform, based on a third decryption key agreed upon between the second device and the first device, decryption processing on the third data to obtain the target data.

In an implementation, after the intermediate device sends the third data transmission message carrying the third data and the second preset identifier to the second device, the receiving module 1210 may receive the third data transmission message sent by the intermediate device, and the second device may parse the third data transmission message to obtain the third data and the second preset identifier carried in the third data transmission message, where the third data is the target data encrypted by using the third encryption key. The second device may prestore a decryption key (that is, the third decryption key) agreed upon between the second device and the first device, where the third decryption key may be used to perform decryption processing on the third data sent by the first device through the intermediate device. After the receiving module 1210 receives the third data transmission message, the decryption module 1220 may determine whether the third data transmission message carries the second preset identifier, and when determining that the third data transmission message carries the second preset identifier, that is, when determining that the third data carried in the third data transmission message is data obtained after the first device encrypts the target data based on the third encryption key and that the intermediate device does not perform any processing on the target data, the decryption module 1220 may perform, based on the third decryption key agreed upon between the second device and the first device, decryption processing on the third data to obtain the target data. In addition, the second device may further prestore a decryption algorithm (which may be referred to as a third decryption algorithm). To be specific, when determining that the third data transmission message carries the second preset identifier, the decryption module 1220 may perform, based on the third decryption key and the third decryption algorithm that are agreed upon between the second device and the first device, decryption processing on the third data to obtain the target data.

Optionally, the first preset identifier or the second preset identifier is set in a Transport Layer Security TLS header; or
the first preset identifier or the second preset identifier is set in a User Datagram Protocol Based Quick Internet Transport Layer QUIC header.

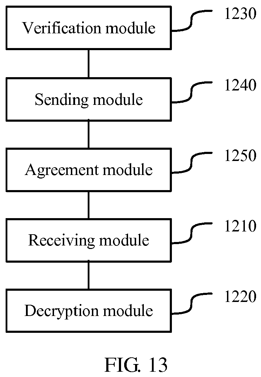

Optionally, the receiving module 1210 is further configured to:
receive a verification request sent by the intermediate device and carrying device information of the intermediate device; and
as shown in FIG. 13, the second device further includes:
   a verification module 1230, configured to verify validity of the intermediate device based on the device information of the intermediate device;
   a sending module 1240, configured to send, to a first device through the intermediate device if the intermediate device is valid, a feedback message used to indicate that the intermediate device is valid; and
   an agreement module 1250, configured to agree with the intermediate device, upon the second decryption key and a corresponding second encryption key that are used for data transmission.

In an implementation, after the intermediate device sends the verification request to the second device, the receiving module 1210 may receive the verification request sent by the intermediate device, and the second device may parse the verification request to obtain the device information of the intermediate device that is carried in the verification request.

After the device information of the intermediate device is obtained, the verification module 1230 may verify validity of the intermediate device based on a preset processing policy. Specifically, after the device information of the intermediate device is obtained, that is, after a device identifier, data processing function information (which may be text information describing a data processing function of the intermediate device), and a certificate of the intermediate device are obtained, where the certificate is issued by a specific organization for the intermediate device and may be obtained after the data processing function information of the intermediate device is encrypted based on a private key, the decryption module 1220 may obtain a public key corresponding to the intermediate device, and decrypt the certificate based on the obtained public key. If the certificate can be decrypted correctly, and the data processing function information obtained through decryption is the same as the data processing function information carried in the verification request, the verification module 1230 may determine that the intermediate device is valid. In addition, the second device may further store an operation that the second device allows the intermediate device to perform. On a basis of the foregoing determining, validity of the intermediate device is verified with reference to the operation that the second device allows the intermediate device to perform. For example, when the data processing function of the intermediate device is video optimization, if the second device prestores data processing that the intermediate device having a video optimization function is allowed to perform on the transmitted data, on a basis that the data processing function information obtained through decryption is the same as the data processing function information carried in the verification request, the verification module 1230 may determine that the intermediate device is valid; or if the second device prestores data processing that the intermediate device having a video optimization function is not allowed to perform on the transmitted data, even if the data processing function information obtained through decryption is the same as the data processing function information carried in the verification request, the verification module 1230 determines that the intermediate device is invalid.

After the verification module 1230 verifies validity of the intermediate device, if the intermediate device is valid, the sending module 1240 may send, to the first device through the intermediate device, the feedback message corresponding to the verification request sent by the intermediate device, where the feedback message may be used to indicate that the intermediate device is valid. Specifically, the sending module 1240 may send, to the intermediate device, the feedback message corresponding to the verification request sent by the intermediate device, where the feedback message may carry the device identifier of the valid intermediate device. In addition, the second device may perform integrity protection processing on the feedback message. The agreement module 1250 may further agree with the intermediate device, upon the second decryption key and the corresponding second encryption key that are used for data transmission.

In this embodiment of the present invention, when the target data to be sent by the first device to the second device needs to be encrypted, the first device may perform encryption processing on the target data by using a first encryption key agreed upon between the first device and the intermediate device, and then send the target data to the intermediate device; after receiving the target data encrypted by using the first encryption key and sent by the first device, the intermediate device may decrypt the target data by using a first decryption key agreed upon between the intermediate device and the first device, to obtain the target data, and perform preset data processing on the target data, and further, may encrypt, by using the second encryption key agreed upon between the intermediate device and the second device, the target data that undergoes data processing, and send the target data to the second device; and after receiving the data sent by the intermediate device, the second device may perform decryption processing by using the second decryption key agreed upon between the second device and the intermediate device, to obtain the target device that undergoes data processing by the intermediate device. In this way, the intermediate device may decrypt, based on the decryption key pre-agreed upon between the intermediate device and the first device, the data sent by the first device, and may read the data to be sent by the first device to the second device, and may further perform preset data processing on the target data. This may enable the intermediate device to work normally.

An embodiment of the present invention further provides a data transmission system. The system provided by this embodiment may implement the processes of the embodiments shown in FIG. 5, FIG. 6, and FIG. 7. The system includes a first device, an intermediate device, and a second device, where the first device is the first device in the embodiments shown in FIG. 2, FIG. 8, and FIG. 9, the intermediate device is the intermediate device in the embodiments shown in FIG. 3, FIG. 10, and FIG. 11, and the second device is the second device in the embodiments shown in FIG. 4, FIG. 12, and FIG. 13.

The first device is configured to obtain target data to be transmitted to the second device, and if the target data is data that the intermediate device is allowed to read, perform, based on a first encryption key agreed upon between the first device and the intermediate device, encryption processing on the target data to obtain first data, and send a first data transmission message carrying the first data to the intermediate device.

The intermediate device is configured to receive the first data transmission message sent by the first device and carrying the first data, perform, based on a first decryption key agreed upon between the intermediate device and the first device, decryption processing on the first data to obtain the target data, perform preset data processing on the target data, perform, based on a second encryption key agreed upon between the intermediate device and the second device, encryption processing on the target data that undergoes data processing, to obtain second data, and send a second data transmission message carrying the second data to the second device.

The second device is configured to receive the second data transmission message sent by the intermediate device and carrying the second data, and perform, based on a second decryption key agreed upon between the second device and the intermediate device, decryption processing on the second data to obtain the target data that undergoes data processing by the intermediate device.

In an implementation, to ensure security of data transmission, more servers require that data to be transmitted to or from terminals should undergo encryption processing. To be specific, the TLS protocol or the QUIC (Quick UDP (User Datagram Protocol, User Datagram Protocol) Internet Connection, UDP Based Quick Internet Transport Layer) protocol is extensively applied. In this case, when the first device intends to send data to the second device, the first device may obtain the target data to be transmitted. After obtaining the target data, the first device may determine whether the target data is the data that the intermediate device is allowed to read. If the target data is the data that the intermediate device is allowed to read, the first device may perform, based on the prestored first encryption key, encryption processing on the target data to obtain the first data. The first device may further prestore an encryption algorithm (which may be referred to as a first encryption algorithm). To be specific, the first device may perform, based on the first encryption key and the first encryption algorithm that are agreed upon between the first device and the intermediate device, encryption processing on the target data to obtain the first data. After obtaining the first data, the first device may send a data transmission message (that is, the first data transmission message) to the intermediate device, where the first data transmission message may further carry the first data.

After the first device sends the first data transmission message to the intermediate device, the intermediate device may receive the first data transmission message sent by the first device, and may parse the first data transmission message to obtain the first data carried in the first data transmission message, where the first data is the target data encrypted by using the first encryption key. After obtaining the target data, the intermediate device may perform preset data processing on the obtained target data based on a data processing function of the intermediate device. Specifically, the intermediate device may have a preset data processing function, and the preset data processing function may be a data statistics function. In this case, for ease of collecting statics, the intermediate device may read the target data to be transmitted from the first device to the second device, without changing the target data. The preset data processing function may also be a video optimization function. In this case, the intermediate device may read the target data to be transmitted from the first device to the second device, and change the target data based on the preset data processing function. For example, the first device is a server, and the video optimization function is to change high definition video data to standard definition video data. In this case, the intermediate device may read the high definition video data (that is, the target data) sent by the server to a terminal, and may further change the target data to the standard definition video data. In other words, the data obtained after the intermediate device performs preset data processing on the target data may be the same as or different from the target data. After performing preset data processing on the target data, the intermediate device may obtain the prestored second encryption key, and perform, based on the second encryption key, encryption processing on the target data that undergoes data processing, to obtain the second data. The intermediate device may further prestore an encryption algorithm (which may be referred to as a second encryption algorithm). To be specific, the intermediate device may perform, based on the second encryption key and the second encryption algorithm that are agreed upon between the intermediate device and the second device, encryption processing on the target data that undergoes data processing, to obtain the second data. After obtaining the second data, the intermediate device may send a data transmission message (that is, the second data transmission message) to the second device, where the second data transmission message may carry the second data.

After the intermediate device sends the second data transmission message carrying the second data to the second device, the second device may receive the second data transmission message sent by the intermediate device, and parse the second data transmission message to obtain the second data carried in the second data transmission message, where the second data is data obtained after the target data that undergoes data processing by the intermediate device is encrypted by using the second encryption key. The second device may prestore a decryption key (that is, the second decryption key) agreed upon between the second device and the intermediate device, where the second decryption key may be used to perform decryption processing on the second data sent by the intermediate device. After receiving the second data, the second device may determine whether the target data is the data that the intermediate device is allowed to read, that is, determine whether the second data is the data obtained after the target data that undergoes preset data processing by the intermediate device is encrypted. When the second device determines that the target data is the data that the intermediate device is allowed to read, the second device may perform, based on the second decryption key, decryption processing on the second data to obtain the target data that undergoes data processing by the intermediate device. The data obtained by the second device may be consistent with the target data, or may be inconsistent with the target data. Whether the data is the same depends on whether data processing performed by the intermediate device on the target data changes the target data. In addition, the second device may further prestore a decryption algorithm (which may be referred to as a second decryption algorithm). To be specific, after obtaining the second data, the second device may perform, based on the second decryption key and the second decryption algorithm that are agreed upon between the second device and the intermediate device, decryption processing on the second data to obtain the target data that undergoes data processing by the intermediate device.

In this embodiment of the present invention, when the target data to be sent by the first device to the second device needs to be encrypted, the first device may perform encryption processing on the target data by using the first encryption key agreed upon between the first device and the intermediate device, and then send the target data to the intermediate device; after receiving the target data encrypted by using the first encryption key and sent by the first device, the intermediate device may decrypt the target data by using the first decryption key agreed upon between the intermediate device and the first device, to obtain the target data, and perform preset data processing on the target data, and further, may encrypt, by using the second encryption key agreed upon between the intermediate device and the second device, the target data that undergoes data processing, and send the target data to the second device; and after receiving the data sent by the intermediate device, the second device may perform decryption processing by using the second decryption key agreed upon between the second device and the intermediate device, to obtain the target device that undergoes data processing by the intermediate device. In this way, the intermediate device may decrypt, based on the decryption key pre-agreed upon between the intermediate device and the first device, the data sent by the first device, and may read the data to be sent by the first device to the second device, and may further perform preset data processing on the target data. This may enable the intermediate device to work normally.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely example embodiments of the present invention, but are not intended to limit the present invention. Any modification, equivalent replacement, and improvement made without departing from the spirit and principle of the present invention shall fall within the protection scope of the present invention.

## Claims

1. A data transmission method, wherein the method comprises:
obtaining, by a first device, target data to be transmitted to a second device;
if the target data is data that an intermediate device is allowed to read, performing, by the first device based on a first encryption key agreed upon between the first device and the intermediate device, encryption processing on the target data to obtain first data; and
sending, by the first device, a first data transmission message carrying the first data to the intermediate device.

2. The method according to claim 1, wherein the first data transmission message further carries a first preset identifier, and the first preset identifier is used to indicate that the intermediate device is allowed to read the target data.

3. The method according to claim 2, wherein the method further comprises:
if the target data is data that the intermediate device is not allowed to read, performing, by the first device based on a third encryption key agreed upon between the first device and the second device, encryption processing on the target data to obtain third data; and
sending, by the first device, a third data transmission message carrying the third data and a second preset identifier to the intermediate device, wherein the second preset identifier is used to indicate that the intermediate device is not allowed to read the target data.

4. The method according to claim 3, wherein the first preset identifier or the second preset identifier is set in a Transport Layer Security TLS header; or
the first preset identifier or the second preset identifier is set in a User Datagram Protocol Based Quick Internet Transport Layer QUIC header.

5. The method according to claim 1, wherein the method further comprises:
sending, by the first device, a verification instruction message to the intermediate device, wherein the verification instruction message is used to instruct the intermediate device to send, to the second device, a verification request used to verify validity of the intermediate device;
receiving, by the first device, a feedback message sent by the intermediate device and used to indicate that the intermediate device is valid; and
agreeing, by the first device with the intermediate device, upon the first encryption key and a corresponding first decryption key that are used for data transmission.

6. A data transmission method, wherein the method comprises:
receiving, by an intermediate device, a first data transmission message sent by a first device and carrying first data, wherein the first data is target data encrypted by using a first encryption key;
performing, by the intermediate device based on a first decryption key agreed upon between the intermediate device and the first device, decryption processing on the first data to obtain the target data, and performing preset data processing on the target data;
performing, by the intermediate device based on a second encryption key agreed upon between the intermediate device and a second device, encryption processing on the target data that undergoes data processing, to obtain second data; and
sending, by the intermediate device, a second data transmission message carrying the second data to the second device.

7. The method according to claim 6, wherein the first data transmission message further carries a first preset identifier, and the first preset identifier is used to indicate that the intermediate device is allowed to read the target data;
the performing, by the intermediate device based on a first decryption key agreed upon between the intermediate device and the first device, decryption processing on the first data to obtain the target data, and performing preset data processing on the target data comprises:
when the intermediate device determines that the first data transmission message carries the first preset identifier, performing, by the intermediate device based on the first decryption key agreed upon between the intermediate device and the first device, decryption processing on the first data to obtain the target data, and performing preset data processing on the target data; and
the sending, by the intermediate device, a second data transmission message carrying the second data to the second device comprises:
sending, by the intermediate device, the second data transmission message carrying the second data and the first preset identifier to the second device.

8. The method according to claim 7, wherein the method further comprises:
receiving, by the intermediate device, a third data transmission message sent by the first device and carrying third data and a second preset identifier, wherein the second preset identifier is used to indicate that the intermediate device is not allowed to read the target data, and the third data is the target data encrypted by using a third encryption key; and
when the intermediate device determines that the third data transmission message carries the second preset identifier, sending, by the intermediate device, the third data transmission message to the second device.

9. The method according to claim 8, wherein the first preset identifier or the second preset identifier is set in a Transport Layer Security TLS header; or
the first preset identifier or the second preset identifier is set in a User Datagram Protocol Based Quick Internet Transport Layer QUIC header.

10. The method according to claim 6, wherein the method further comprises:
receiving, by the intermediate device, a verification instruction message sent by the first device;
sending, by the intermediate device, a verification request carrying device information of the intermediate device to the second device;
receiving, by the intermediate device, a feedback message sent by the second device and used to indicate that the intermediate device is valid, and sending, to the first device, the feedback message sent by the second device and used to indicate that the intermediate device is valid; and
agreeing, by the intermediate device with the first device, upon the first encryption key and the first decryption key that are used for data transmission, and agreeing with the second device, upon the second encryption key and a corresponding second decryption key that are used for data transmission.

11. A data transmission method, wherein the method comprises:
receiving, by a second device, a second data transmission message sent by an intermediate device and carrying second data, wherein the second data is data obtained after target data that undergoes data processing by the intermediate device is encrypted; and
performing, by the second device based on a second decryption key agreed upon between the second device and the intermediate device, decryption processing on the second data to obtain the target data that undergoes data processing by the intermediate device.

12. The method according to claim 11, wherein the second data transmission message further carries a first preset identifier, and the first preset identifier is used to indicate that the intermediate device is allowed to read the target data; and
the performing, by the second device based on a second decryption key agreed upon between the second device and the intermediate device, decryption processing on the second data to obtain the target data that undergoes data processing by the intermediate device comprises:
when the second device determines that the second data transmission message carries the first preset identifier, performing, by the second device based on the second decryption key agreed upon between the second device and the intermediate device, decryption processing on the second data to obtain the target data that undergoes data processing by the intermediate device.

13. The method according to claim 12, wherein the method further comprises:
receiving, by the second device, a third data transmission message sent by the intermediate device and carrying third data and a second preset identifier, wherein the second preset identifier is used to indicate that the intermediate device is not allowed to read the target data, and the third data is the target data encrypted by using a third encryption key; and
when the second device determines that the third data transmission message carries the second preset identifier, performing, by the second device based on a third decryption key agreed upon between the second device and the first device, decryption processing on the third data to obtain the target data.

14. The method according to claim 13, wherein the first preset identifier or the second preset identifier is set in a Transport Layer Security TLS header; or
the first preset identifier or the second preset identifier is set in a User Datagram Protocol Based Quick Internet Transport Layer QUIC header.

15. The method according to claim 11, wherein the method further comprises:
receiving, by the second device, a verification request sent by the intermediate device and carrying device information of the intermediate device;
verifying, by the second device, validity of the intermediate device based on the device information of the intermediate device; and
if the intermediate device is valid, sending, by the second device to a first device through the intermediate device, a feedback message used to indicate that the intermediate device is valid, and agreeing with the intermediate device, upon the second decryption key and a corresponding second encryption key that are used for data transmission.

16. A first device, wherein the first device comprises:
an obtaining module, configured to obtain target data to be transmitted to a second device;
an encryption module, configured to: if the target data is data that an intermediate device is allowed to read, perform, based on a first encryption key agreed upon between the first device and the intermediate device, encryption processing on the target data to obtain first data; and
a sending module, configured to send a first data transmission message carrying the first data to the intermediate device.

17. The first device according to claim 16, wherein the first data transmission message further carries a first preset identifier, and the first preset identifier is used to indicate that the intermediate device is allowed to read the target data.

18. The first device according to claim 17, wherein the encryption module is further configured to:
if the target data is data that the intermediate device is not allowed to read, perform, based on a third encryption key agreed upon between the first device and the second device, encryption processing on the target data to obtain third data; and
the sending module is further configured to:
send a third data transmission message carrying the third data and a second preset identifier to the intermediate device, wherein the second preset identifier is used to indicate that the intermediate device is not allowed to read the target data.

19. The first device according to claim 18, wherein the first preset identifier or the second preset identifier is set in a Transport Layer Security TLS header; or
the first preset identifier or the second preset identifier is set in a User Datagram Protocol Based Quick Internet Transport Layer QUIC header.

20. The first device according to claim 16, wherein the sending module is further configured to:
send a verification instruction message to the intermediate device, wherein the verification instruction message is used to instruct the intermediate device to send, to the second device, a verification request used to verify validity of the intermediate device; and
the first device further comprises:
a receiving module, configured to receive a feedback message sent by the intermediate device and used to indicate that the intermediate device is valid; and
an agreement module, configured to agree with the intermediate device, upon the first encryption key and a corresponding first decryption key that are used for data transmission.

21. An intermediate device, wherein the intermediate device comprises:
a receiving module, configured to receive a first data transmission message sent by a first device and carrying first data, wherein the first data is target data encrypted by using a first encryption key;
a decryption module, configured to perform, based on a first decryption key agreed upon between the intermediate device and the first device, decryption processing on the first data to obtain the target data, and perform preset data processing on the target data;
an encryption module, configured to perform, based on a second encryption key agreed upon between the intermediate device and a second device, encryption processing on the target data that undergoes data processing, to obtain second data; and
a sending module, configured to send a second data transmission message carrying the second data to the second device.

22. The intermediate device according to claim 21, wherein the first data transmission message further carries a first preset identifier, and the first preset identifier is used to indicate that the intermediate device is allowed to read the target data;
the decryption module is specifically configured to:
when it is determined that the first data transmission message carries the first preset identifier, perform, based on the first decryption key agreed upon between the intermediate device and the first device, decryption processing on the first data to obtain the target data, and perform preset data processing on the target data; and
the sending module is specifically configured to:
send the second data transmission message carrying the second data and the first preset identifier to the second device.

23. The intermediate device according to claim 22, wherein the receiving module is further configured to:
receive a third data transmission message sent by the first device and carrying third data and a second preset identifier, wherein the second preset identifier is used to indicate that the intermediate device is not allowed to read the target data, and the third data is the target data encrypted by using a third encryption key; and
the sending module is further configured to:
when it is determined that the third data transmission message carries the second preset identifier, send the third data transmission message to the second device.

24. The intermediate device according to claim 23, wherein the first preset identifier or the second preset identifier is set in a Transport Layer Security TLS header; or
the first preset identifier or the second preset identifier is set in a User Datagram Protocol Based Quick Internet Transport Layer QUIC header.

25. The intermediate device according to claim 21, wherein the receiving module is further configured to:
receive a verification instruction message sent by the first device;
the sending module is further configured to:
send a verification request carrying device information of the intermediate device to the second device;
the receiving module is further configured to:
receive a feedback message sent by the second device and used to indicate that the intermediate device is valid;
the sending module is further configured to:
send, to the first device, the feedback message sent by the second device and used to indicate that the intermediate device is valid; and
the intermediate device further comprises:
an agreement module, configured to agree with the first device, upon the first encryption key and the first decryption key that are used for data transmission, and agree with the second device, upon the second encryption key and a corresponding second decryption key that are used for data transmission.

26. A second device, wherein the second device comprises:
a receiving module, configured to receive a second data transmission message sent by an intermediate device and carrying second data, wherein the second data is data obtained after target data that undergoes data processing by the intermediate device is encrypted; and
a decryption module, configured to perform, based on a second decryption key agreed upon between the second device and the intermediate device, decryption processing on the second data to obtain the target data that undergoes data processing by the intermediate device.

27. The second device according to claim 26, wherein the second data transmission message further carries a first preset identifier, and the first preset identifier is used to indicate that the intermediate device is allowed to read the target data; and
the decryption module is specifically configured to:
when it is determined that the second data transmission message carries the first preset identifier, perform, based on the second decryption key agreed upon between the second device and the intermediate device, decryption processing on the second data to obtain the target data that undergoes data processing by the intermediate device.

28. The second device according to claim 27, wherein the receiving module is further configured to:
receive a third data transmission message sent by the intermediate device and carrying third data and a second preset identifier, wherein the second preset identifier is used to indicate that the intermediate device is not allowed to read the target data, and the third data is the target data encrypted by using a third encryption key; and
the decryption module is further configured to:
when it is determined that the third data transmission message carries the second preset identifier, perform, based on a third decryption key agreed upon between the second device and the first device, decryption processing on the third data to obtain the target data.

29. The second device according to claim 28, wherein the first preset identifier or the second preset identifier is set in a Transport Layer Security TLS header; or
the first preset identifier or the second preset identifier is set in a User Datagram Protocol Based Quick Internet Transport Layer QUIC header.

30. The second device according to claim 26, wherein the receiving module is further configured to:
receive a verification request sent by the intermediate device and carrying device information of the intermediate device; and
the second device further comprises:
a verification module, configured to verify validity of the intermediate device based on the device information of the intermediate device;
a sending module, configured to send, to a first device through the intermediate device if the intermediate device is valid, a feedback message used to indicate that the intermediate device is valid; and
an agreement module, configured to agree with the intermediate device, upon the second decryption key and a corresponding second encryption key that are used for data transmission.

31. A data transmission system, wherein the system comprises a first device, an intermediate device, and a second device, wherein
the first device is configured to obtain target data to be transmitted to the second device, and if the target data is data that the intermediate device is allowed to read, perform, based on a first encryption key agreed upon between the first device and the intermediate device, encryption processing on the target data to obtain first data, and send a first data transmission message carrying the first data to the intermediate device;
the intermediate device is configured to receive the first data transmission message sent by the first device and carrying the first data, perform, based on a first decryption key agreed upon between the intermediate device and the first device, decryption processing on the first data to obtain the target data, perform preset data processing on the target data, perform, based on a second encryption key agreed upon between the intermediate device and the second device, encryption processing on the target data that undergoes data processing, to obtain second data, and send a second data transmission message carrying the second data to the second device; and
the second device is configured to receive the second data transmission message sent by the intermediate device and carrying the second data, and perform, based on a second decryption key agreed upon between the second device and the intermediate device, decryption processing on the second data to obtain the target data that undergoes data processing by the intermediate device.
